# EUROPEAN PATENT SPECIFICATION

(11) **EP 3 855 885 B1**
(45) Date of publication and mention of the grant of the patent: **10.09.2025**
(21) Application number: 19778989.4
(22) Date of filing: 27.09.2019
(51) Int. Cl.: A01F 15/08, F16H 61/688, F16H 61/00, A01F 15/07

(54) **A COMBINATION OF A TRACTOR AND A BALER FOR BALING HARVESTED CROP, AND METHOD OF BALING HARVESTED CROP THEREOF**
KOMBINATION AUS EINEM TRAKTOR UND EINER BALLENPRESSE ZUM BALLENPRESSEN VON ERNTEGUT SOWIE VERFAHREN ZUM BALLENPRESSEN VON ERNTEGUT
COMBINAISON D'UN TRACTEUR ET D'UNE RAMASSEUSE-PRESSE PERMETTANT DE METTRE EN BALLES UNE RÉCOLTE RÉCOLTÉE, ET SON PROCÉDÉ DE MISE EN BALLES D'UNE RÉCOLTE RÉCOLTÉE

(30) Priority: 28.09.2018 IT 201800009017
(43) Date of publication of application: 04.08.2021
(73) Proprietor: CNH Industrial Italia S.p.A., 10156 Torino (IT)
(72) Inventor: BERSELLI, Alberto, 41043 Modena (IT); MANTOVANI, Michele, 46026 Quistello (MN) (IT); PETRIGLIANO, Rocco, 75029 Valsinni, MT (IT)
(74) Representative: CNH Industrial IP Department
(86) International application number: PCT/EP2019/076153
(87) International publication number: WO 2020/064993

(56) References cited:
- US-A1- 2007 289 399
- US-A1- 2007 289 399
- US-A1- 2013 116 895
- US-A1- 2013 116 895
- ANONYMOUS: "New Holland Agriculture T6 Dynamic Command(TM) A New Transmission of Power", 12 November 2017 (2017-11-12), XP055587116, Retrieved from the Internet <URL:https://agriculture.newholland.com/eu/en-uk/about-us/whats-on/news-events/2017/t6-dynamic-command> [retrieved on 20190509]
- NEW HOLLAND AGRICULTURE: "New Holland Dynamic Command(TM) transmission", 2 May 2018 (2018-05-02), pages 1 - 6, XP054979379, Retrieved from the Internet <URL:https://www.youtube.com/watch?v=inXZnoKoKO4> [retrieved on 20190510]
- ANONYMOUS: "New Holland Agriculture T6 Dynamic Command(TM) A New Transmission of Power", 12 November 2017 (2017-11-12), XP055587116, Retrieved from the Internet <URL:https://agriculture.newholland.com/eu/en-uk/about-us/whats-on/news-events/2017/t6-dynamic-command> [retrieved on 20190509]
- NEW HOLLAND AGRICULTURE: "New Holland Dynamic Command(TM) transmission", 2 May 2018 (2018-05-02), pages 1 - 6, XP054979379, Retrieved from the Internet <URL:https://www.youtube.com/watch?v=inXZnoKoKO4> [retrieved on 20190510]

## Description

The present invention relates to a combination of a tractor and a baler for baling harvested crop according to the preamble of claim 1 and to a corresponding method according to the preamble of claim 8. In particular, the present invention relates to an improved tractor stop sequence to control bale wrapping in a baler. The present invention also relates to a method of baling harvested crop with said combination of a tractor and a baler.

At the state of the art, agricultural balers have been used to consolidate and package crop material so as to facilitate the storage and handling of the crop material for later use. Usually, a mower-conditioner cuts and conditions the crop material for windrow drying in the sun. When the cut crop material is properly dried, a baler, for example a round baler, is pulled by a tractor to travel along the windrows and pick up the crop material to form a round bale inside the baling chamber of the baler.

When the bale size reaches a particular size, the driver manually stops the tractor and initiates bale wrapping to wrap the finished bale with netting, wrapping, or twine. This typically requires the operator to press the clutch, put the tractor in neutral and hold down the brake. After the bale is wrapped, the operator ejects the bale from the back of the baler to the ground manually by typically pulling a hydraulic lever.

The operator manually restarts the tractor by disengaging the brake and clutch to drive the tractor to pick up crop material for the baling process to begin again. This bale forming and wrapping is repeated with the operator being tasked to manually conduct tractor stopping operation before initiating bale wrapping and bale ejection. The operator then manually restarts the tractor following bale wrapping and ejection.

It is therefore clear that the combinations of a tractor and a baler known at the state of the art involve a repetitive and time-consuming process.

In this frame, it is the main object of the present invention to overcome the drawbacks of the solutions known at the state of the art.

US2013116895 discloses a combination of a tractor and a baler to automate tractor stopping and baler wrapping while incorporating operator interaction to improve the efficiency of the tractor and baler combination in operation, in this combination the stop command device is a brake switch. However, for tractor employing dual clutch transmissions the need is felt to improve existing methods of control dual clutch transmissions in order to lock the transmission without using the brake when the work vehicle is at stand still.

It is therefore an object of the present invention to provide a combination of a tractor and a baler for baling harvested crop, and a method for baling harvested crop with said combination of a tractor and a baler, which are conceived in a manner to allow an automated tractor stop integrated with bale wrapping functionality.

Moreover, it is a further object of the present invention to provide a combination of a tractor and a baler for baling harvested crop, and a method for baling harvested crop with said combination of a tractor and a baler, which incorporate operator notification and interaction during the tractor stop process.

These objects are achieved by the present invention through a combination of a tractor and a baler for baling harvested crop, and a method for baling harvested crop with said combination of a tractor and a baler, incorporating the features set out in appended claims 1 and 8. Preferred aspects are defined by the dependent claims.

Further objects, features and advantages of the present invention will become apparent from the following detailed description and from the annexed drawings, which are supplied by way of non-limiting example, wherein:
- Figure 1 shows a schematic side view of a combination of a tractor and a baler according to the present invention;
- Figure 2 shows a first schematic representation of a clutch transmission system of the tractor according to the present invention;
- Figures 3-9 are schematic representations of the clutch transmission system of figure 2 during different phases of operation;
- Figure 10 shows a sequence for stopping a tractor prior to initiating a bale wrapping sequence;
- Figure 11 shows a sequence of wrapping a bale after initiating the tractor stop sequence shown in FIG. 10;
- Figure 12 shows an alternative sequence of wrapping a bale after initiating a tractor stop sequence shown in FIG. 10;
- Figure 13 shows a sequence for modifying tractor deceleration and wrapping a bale after initiating a tractor stop sequence shown in FIG. 10.

The problems in the prior art have motivated the creation of combination of a tractor and a baler for baling harvested crop and a related method of baling harvested crop with said combination of a tractor and a baler. In particular, the combination and method according to the present invention allow to automate tractor stopping and baler wrapping processes while providing for operator interaction during the automated stopping and wrapping sequence. Moreover, the provisions of the present invention improve the efficiency of the wrapping process by synchronizing tractor stopping with baler wrapping initiation to cut down lag time after the tractor stops, or approximately approaches stop, up until the beginning of wrapping being placed on a completed bale inside the bale chamber of the baler.

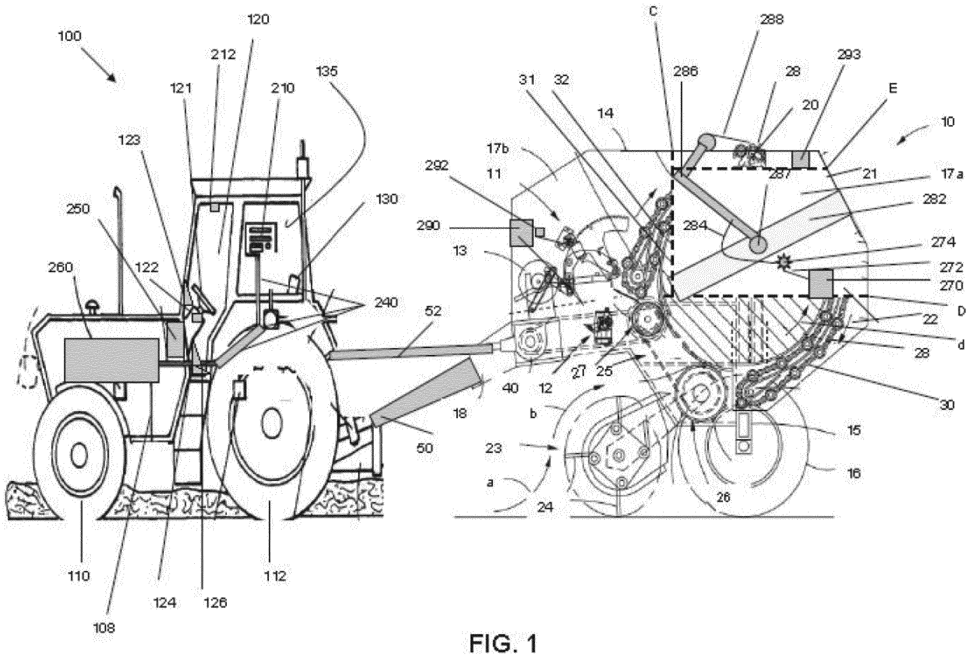

Figure 1 illustrates a schematic side view of a combination of a tractor 100 and a baler 10; in particular, said baler 10 is a fixed chamber round baler 10 and is pulled by the tractor 100. Baler 10 is configured to pickup and bale crop material in a field. Crop in the field is usually arranged in a windrow as it is engaged by a baler 10 being pulled along a windrow of cut crop material by a tractor 100.

Baler 10 comprises a wrapping system 11, 12, 13 for wrapping a package of crop material formed in the baler 10, in particular said package being substantially cylindrical. The wrapping system 11, 12, 13 of baler 10 comprises a net dispensing assembly 11 and a cutting assembly 12 for cutting web material, such as netting, issued from a supply roll 13.

As shown in figure 1, round baler 10 comprises a main frame 14 with a main support beam 15 on which a pair of wheels 16 (only one shown) are rotatably affixed. The main frame 14 includes a pair of side walls 17a, 17b between which a cylindrical bale forming chamber extends. For the purposes of clarity aft side wall 17b is shown in FIG. 1 and the elements mounted inwardly thereof are shown in full lines for clarity, which is an approach not uncommon in the descriptions in patents. A portion of foreground side wall 17a is shown between dashed lines C, D, and E for the purpose of showing bale size sensing devices housed external to the bale chamber outside side wall 17a. A portion of the bale chamber is still shown below dash line D. For illustrative purposes reference letter B is used to designate a bale, shown as the cross section in the chamber, wherein only a portion of the bale B is shown below foreground side wall 17a.

Baler 10 also includes a tongue 18 extending from the forward portion of main frame 14 for conventional connection to a tractor 100. Pivotally connected to the sidewalls of main frame 14 by a pair of stub shafts (not shown) is tailgate 21, which may be closed during the formation of the bale B (as shown in FIG. 1) or pivoted open about stub shaft 20 to discharge a completed bale B out the back of the baler 10 in the opposite direction of the tractor 100. The tailgate 21 includes tailgate walls 22 coextensive with side walls 17a and 17b. A pickup assembly 23 mounted on main frame 14 in a suitable manner includes a plurality of fingers or tines 24 moveable in a predetermined path to lift crop material from the ground, generally depicted by direction arrow a, and deliver it rearward in direction arrow b toward a transverse inlet 25 in the chamber defined by a floor roll 26 and a transverse stripper roll 27, both of which rolls are rotatably supported on mainframe 14 between sidewalls 17a and 17b.

FIG. 1 also shows a portion of the bale forming chamber behind external wall 17a. As shown, the bale forming chamber is defined primarily by a round apron assembly 28 comprising a pair of support chains 30 mounted to travel along a continuous path, the inner run of which is defined on sidewalls 17a and 17b and tailgate walls 22 by front and rear sections 31 and 32 of a continuous chain guide track that separates at a point of track adjacent the stub shaft 20 during bale discharge. Floor roll 26 receives bale material at its forward surface, moving the bale material upward and rearward, clockwise as shown in FIG. 1. Bale material leaves the floor roll 26 and enters the bale chamber, which rotates, moving the bale material from a lower position, rearward and upward in a circular motion, counterclockwise as shown in FIG. 1 by arrow d. The bale B grows within the bale chamber and the diameter of the bale B expands into the circumference of the round apron assembly 28.

When the bale B has achieved a desired size and density, bale wrapping may begin by means of wrapping system 11, 12, 13. In particular, wrapping is dispensed from net dispensing assembly 11 to ensure the bale B maintains its shape and density. Cutting assembly 12 is utilized to cut the net once the bale B has been wrapped. The wrapped bale B may be ejected from the baler 10 and onto the ground by raising the tailgate 21 of the baler 10 connected to hydraulic lever (not shown). The tailgate 21 is then closed and the cycle repeated as necessary and desired to manage the field of cut crop material.

FIG. 1 also shows an exemplary tractor 100 for pulling the exemplary baler 10 described above. The tractor 100 pulls the baler 10 by a hitch 50 coupled to the tongue 18 of the baler 10. The tractor 100 is also connected to the baler 10 by a power take off (PTO) shaft 52. The PTO shaft 52 is used for driving movable elements in the baler 10 from the engine of the tractor 100. As shown, tractor 100 includes a main frame 108 supported by steerable front wheels 110 and rotatably affixed rear wheels 112. A cabin 120 is supported by the main frame 108.

The cabin 120 houses an operator seat 130 and operator controls. Operator controls in the cabin 120 include a steering wheel 121 to turn the steerable front wheels 110, a clutch pedal 124, and brake pedal 126. Operator controls also include a shuttle lever 122. The shuttle lever 122 can provide a constant tractor speed in the field. Shuttle levers are typically two types: momentary or three position. In a momentary shuttle lever, an operator will press the lever into one of three states, each of the states being forward, neutral, and reverse. The tractor will respond accordingly to the lever in the desired state. The lever will then immediately fall into a fourth state or centered position. Though the lever is in the centered position, the tractor will continue to drive according to the previous commanded state of forward, neutral, or reverse until the operator again presses the lever into one of the three driving state lever positions. With a three position shuttle lever, only three positions are available and the lever remains in the state set by the operator. In the up, or forward position, the shuttle lever is in drive and thus the tractor moves forward. In the middle, or centered position, the shuttle lever is in neutral. In the low, or aft position, the shuttle lever is in reverse and thus the tractor moves backward. In the three position shuttle lever, the lever remains in the one of three states and the tractor acts accordingly until the operator transitions the lever. Other exemplary tractors 100 may include a gas pedal (not shown) in addition to the shift lever 122 to provide the operator varied speed control of the tractor. Other embodiments may use a joystick or gear shift lever which both engages forward/reverse/neutral and also selects the gear in the transmission instead of a shuttle lever. A hydrostatic vehicle, such as a combine or windrower may use a control handle or pedal that controls the displacement of the hydraulic pump and hence ground speed.

Other operator controls typically located to the right of a forward facing operator in the operator seat 130 in the cabin 120 include selectable transmission gear switching, power take-off switching, and torque settings for the PTO output (all not shown). Tractors may also include, as shown in FIG. 1, a display unit 123, and/or instrument cluster, providing for example the shuttle lever position and/or a speedometer.

FIG. 1 also shows interconnected controllers and sensors between the tractor 100 and baler 10. FIG. 1 shows an exemplary bale sensor 274 mounted to the outside of the baler 10 on foreground sidewall 17a. In this example, the sensor is a rotary potentiometer. Bracket 282 is also mounted to baler foreground sidewall 17a externally. A serpentine arm 286 is pivotally connected to the bracket 282 at pivot connection 287. The opposing end of the serpentine arm 286 is connected by an apron connection link 288 to the top of the apron 28 partially shown above foreground sidewall 17a. As the bale expands to a near complete stage, the apron expands and tension on the apron 28 acts on the serpentine arm 286 pivoting from pivot connection 287. The pivoting arm 286 pulls a chain 284 causing the bale sensor 274, in this example a rotary potentiometer, to rotate. The analogue value of the rotary potentiometer continuously changes as the serpentine arm 286 moves externally to the baler 10.

Further information regarding exemplary sensors that may be used with embodiments of the present invention can be found in U.S. Pat. No. 4,855,924, entitled "Round Baler with Continuous Bale Size Monitoring", which is assigned to the present assignee of the present application and which is incorporated herein by reference in its entirety.

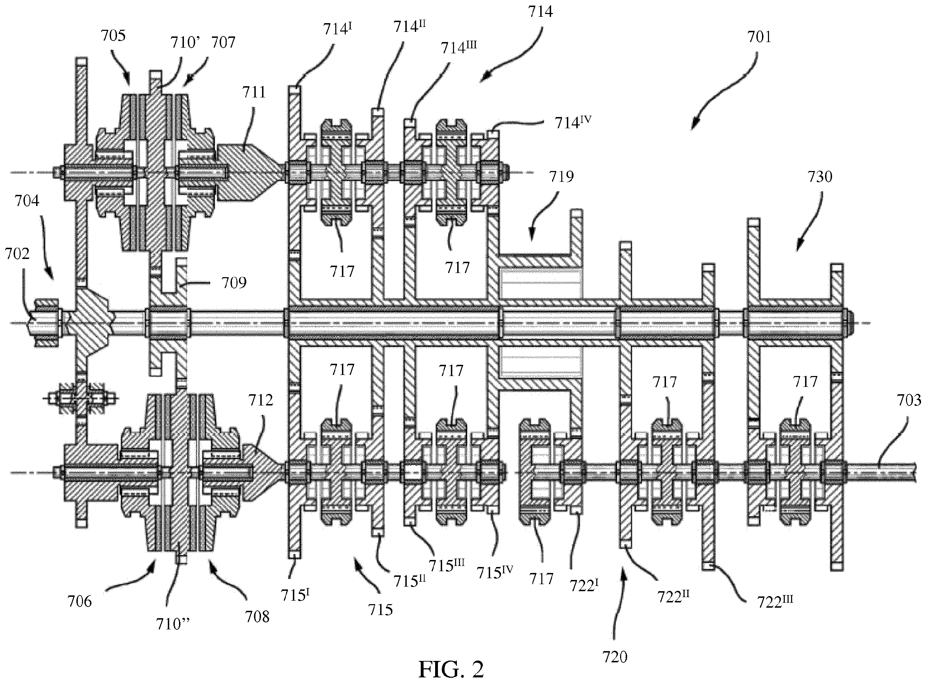

Bale sensors 274, such as the rotary potentiometer shown in FIG. 1 are sufficient to sense the completion of a bale B within the baler 10. Other sensors that may be used within the baler 10, include for example pressure sensors to measure pressure of the bale B on the continuous chain guide track of the bale chamber apron 28. Strain gauges may also be used to measure the expansion of a generated bale in the baler 10. Other sensors may include torsion loading sensors to measure loading on components in the baler 10. Torque loading sensors may also be used on the same or other baler components. In other embodiments, sensors may include limit switches, such as Hall effect sensors, reluctance sensors, IR sensors, or any other types of sensors to detect a condition that indicates the bale B has reached a predetermined size. Analogue signals from the sensors are either directly transmitted by the sensor to a baler controller 210 housed in the cabin 120 of the tractor 100 or relayed by a sensor relay unit 270, located elsewhere on the baler, as for example shown in FIG. 2 externally on foreground sidewall 17a of the baler 10 connected to sensor 274 by electrical path 272.

In some tractor and baler combinations, relay unit 270 transmits the sensor information to the baler controller 210 along electrical wiring in an analog or digital manner. In other tractor and baler combinations that relayed signal travels over a CAN-bus. The relay unit 270 may convert analogue or digital sensor signals for wireless transmission to the baler controller 210. The relay unit 270, shown in FIG. 1 transmits the sensed information at a predetermined frequency for reception at a receiver built into the baler controller 210.

In recent years, tractor and baling controls have been integrated within or in proximity to the cabin 120 of the tractor 100 to provide the operator with in-reach control of variable parts of the tractor-baler configuration. As shown in FIG. 1, baler controller 210 is attached to the inside of a foreground window 135 of the cabin 120. The baler controller 210 receives information about the current status of the baler configuration, as for example the size of a bale B and bale wrapping processing information in the baler 10. As for example, in embodiments of the invention further described below, the baler controller 210 receives a signal when the bale B has reached a predetermined size as sensed by the bale sensor 274. The baler 10 may receive information about the size of the bale B continuously or at particular events, for example bale completion, from sensors and or other communications devices on the baler 10 via electrical wiring including analog, digital, or CAN-bus. In this particular example, as shown in FIG. 1, the baler controller 210 houses an integrated receiver to receive transmitted signal information over a specified frequency from the relay unit 270 on the baler 10. The relay unit 270 receives analogue or digital sensor signals and converts the information for wireless transmission to the baler controller 210.

As shown in FIG. 1, the baler controller 210 is connected to a tractor controller 250 via a CAN-bus 240. The tractor controller 250 is located approximately between an engine compartment housing the transmission system 260 and the display unit 123, located internally inside the cabin 120. In other tractors, the tractor controller 250 may be embedded elsewhere in the cabin 120, for example under the operator seat 130, or elsewhere inside mainframe 108 in proximity to the transmission system 260. In other tractors, multiple controllers may communicate over the CAN-bus 240 which may control one or more tractor functions. Incorporated into the tractor cabin 120 for use in embodiments of the present invention is a tractor stop command device 212 so that an operator may initialize an auto-stop sequence in the tractor. In some embodiments, the tractor stop command device 212 may be connected to either tractor controller 250 or the baler controller 210 or both. Connection from the tractor stop command device 212 is electrical. The tractor stop command device 212 may be an electrical switch, button, lever, or any other electrical input application. The device may be located anywhere in the cabin 120 and in proximity to the operator of the tractor. The tractor stop command device 212 may also be located on the baler controller 210 or tractor controller 250 or any other operator interface on or in the tractor 100. The electrical connection or communication link from the tractor stop command device 212 may be across a CAN-bus. Additionally, a tractor restart device (not shown) may also be located in the cabin 120 so that an operator may initialize an auto restart sequence in the tractor 100, with the restart device having similar connections as the stop command device 212 in the tractor 100. In other embodiments of the invention, the stop and restart commands may come from the same shared device.

In some embodiments of the invention, either or both the baler controller 210 and tractor controller 250 provide for automatic control processes. Both controllers 210, 250 may include one or more microcomputers, microcontrollers, or processors including appropriate peripherals such as memory, power source, data buses, and other circuitry appropriate for carrying out controller functionality. Both controllers 210, 250 may use internal memory to store data (e.g. saved settings, recorded status information, configuration files, user profiles, etc.) or instructions (e.g. applications, algorithms, or programs used in the operation of the present invention) for use during operation. Memory may be a local RAM, ROM, flash memory, hard drive, solid state storage, removable memory, or any combination or subset thereof.

Moreover, either or both controllers may access programming and data information from memory. This data may include information about the current configuration of the tractor and baler, user profile files, and more configuration files. The instructions obtained from memory may include information sufficient to make a determination regarding changes to the tractor speed, predicting future tractor speeds, predicting future tractor stop times, or baler wrapping and cutting start and stop times.

In many embodiments of the invention, baler controller 210 interacts with the operator of the tractor 100 via an operator display interface. The baler controller 210, shown in FIG. 1, incorporates a display interface on the opposing side of the controller shown in FIG. 1, facing the operator. In other embodiments, the baler controller and display interface are separate and located in different locations within the cabin 120. In other embodiments, the baler controller 210 incorporates other visual display interfaces such as multicolor lights, or single color lights, text display boards, or picture displays to alert an operator of information pertaining to the tractor or baler or both. In other embodiments, the baler controller 210 incorporates other audio interfaces such as speakers to provide the operator with an audio tone, beep, chirp, or synthesized voice to alert an operator of information pertaining to tractor or the baler or both. The baler controller 210 interface may provide the operator with information pertaining to the size of the bale B in the baler 10, whether the bale B in the bale chamber has reached a predetermined size to begin wrapping the bale B, net wrapping process information, and net cutting information. The interface also allows the baler controller 210 to receive operator input (for example: eject a bale B or cut the net wrapping). The operator interface may include screens such as a CRT, LCD, LED, OLED, or AMOLED. The interface typically includes input devices such as buttons, keypads, touch screens, or the like. Baler controller interface allows for an operator to inject some manual implementation for net wrapping, net cutting, or bale B ejection during the baling process.

In many embodiments of the invention, the interface between the tractor control unit 250 and the operator is through the display unit 123. The tractor control unit 250 provides the operator with speed and engine performance via the display unit 123. The tractor control unit 250 may obtain information pertaining to speed and engine performance from sensors (not shown) housed within the transmission system 260.

In many embodiments of the invention, either or both controllers (baler controller 210 and tractor controller 250) can perform some form of automatic control over the baler 10 and/or tractor 100. For example, the baler controller 210 may automatically command cutting driver 292, housed in proximity to the cutting assembly 12 to cut netting after a bale B is wrapped. In addition, the baler controller 210 can automatically command a net dispenser motor 290 to drive the net dispenser 11 providing wrapping material onto a bale B enclosed in the bale chamber. The baler controller 210 may also automatically command tailgate actuator 293 to drive the tailgate 21 up to allow for a completed bale B to eject and then to close. In other balers 10, the tailgate 21 may be normally opened and then closed by the tailgate actuator 293. The tractor controller 250 may automatically slow down or speed up a tractor 100 by adjusting components of the transmission system 260. The tractor controller 250 can apply braking, engage and disengage engine/transmission clutches, and change gearing.

Some embodiments of the invention are described in reference to figures from 2 to 9 for the tractor controller 250 to automatically stop and hold a tractor still and to automatically restart a tractor from the stopped position.

According to the present invention, the driving system of the tractor 100 comprises a dual clutch transmission 701 that is automatically controlled by the tractor controller 250 to stop the tractor 100 and hold the tractor 100 in place with an engine of the tractor 100 still running, in particular with the brakes of the tractor 100 being not applied when the tractor controller 250 initiates the tractor stop.

The dual clutch transmission 701 according to the present invention comprises an engine input shaft 702 operatively connected to an engine (not illustrated) of the tractor 100, in particular, said input shaft 702 being configured to be coupled to an output of an engine of the tractor 100.

The dual clutch transmission 701 also comprises an output shaft 703, which can be coupled to the driving system of the tractor 100.

Moreover, transmission 701 comprises a first main clutch 705 (hereinafter also referred to as "forward clutch") and a second main clutch 706 (hereinafter also referred to as "rearward clutch"), both coupled to the engine input shaft 702 via an input stage 704. Preferably the forward clutch 705 and the rearward clutch 706 are placed opposite each other with respect to the input shaft 702.

In a known configuration the forward clutch 705 couples the engine input shaft 702 to the output shaft 703 in order to allow a forward motion of the tractor 100, while the rearward clutch 706 couples the engine input shaft 702 to the output shaft 703 in order to allow a rearward motion of the tractor 100.

Preferably forward clutch 705 and rearward clutch 706 are wet clutches and are controlled by an hydraulic circuit (not shown) which is configured to allow at least four possible conditions:
- a first condition, corresponding to clutches 705 and 706 disengaged, in which in clutches 705 and 706 no hydraulic fluid, or a hydraulic fluid at low pressure, is present;
- a second condition, corresponding to clutches 705 and 706 still disengaged but ready to transmit a torque, in which in clutches 705 and 706 is present an hydraulic fluid at a pre-set limit pressure;
- a third condition, corresponding to clutches 705 and 706 engaged but not able to transmit all the possible torque, in which in clutches 705 and 706 is present an hydraulic fluid at pressure such that torque is transmitted but there is still slipping. The torque transmitted is obviously proportional to the pressure of such hydraulic fluid;
- a fourth condition, corresponding to clutches 705 and 706 engaged and transmitting all the torque, in which in clutches 705 and 706 is present an hydraulic pressure at a pre-set level of pressure to ensure the transmission of all the torque.

Transmission 701 further comprises a first clutch 707 (hereinafter also referred to as "even clutch") and a second clutch 708 (hereinafter also referred to as "odd clutch"). The even clutch 707 is configured to couple a first auxiliary shaft 711 (hereinafter also referred to as "even shaft") with the forward clutch 705. The odd clutch 708 is configured to couple a second auxiliary shaft 712 (hereinafter also referred to as "odd shaft") with the rearward clutch 706.

Advantageously, the forward clutch 705 is coupled to the even clutch 707 by a first housing 710' and the rearward clutch 706 is coupled to the odd clutch 708 by a second housing 710''. The first and the second housing 710', 710'' are coupled together by an intermediate gear 709 carried by the engine input shaft.

Preferably the intermediate gear 709 is configured to be coupled to the first housing 710' through a first gear ratio and to be coupled to the second housing 710'' through a second gear ratio. The first and the second gear ratio are preferably different.

In view of above, thanks to the coupling of the housings 710', 710" with the intermediate gear 709, the even shaft 711 may be coupled to the rearward clutch 706 and the odd shaft 712 may be coupled to the forward clutch 705.

The even shaft 711 and the odd shaft 712 each comprise a plurality of gears 714, 715 having a different size one with respect to the other.

Preferably the even shaft 711 may comprise four gears 714, namely a first gear 714ⁱ having the biggest diameter, a fourth gear 714^{iv} having the smallest diameter and a second and third gears 714ⁱⁱ, 714ⁱⁱⁱ having respective diameters comprised between the ones of first gear 714ⁱ and the fourth gear 714^{iv.}

Similarly, the odd shaft 712 may comprise four gears 715, namely a first gear 715ⁱ having the biggest diameter, a fourth gear 715^{iv} having the smallest diameter and a second and third gears 715ⁱⁱ, 715ⁱⁱⁱ having respective diameters comprised between the ones of first gear 715ⁱ and the fourth gear 715^{iv}.

Advantageously the gear 714ⁱ has the same diameter of gear 715ⁱ, gear 714ⁱⁱ has the same diameter of gear 715ⁱⁱ, gear 714ⁱⁱⁱ has the same diameter of gear 715ⁱⁱⁱ and gear 714^{iv} has the same diameter of gear 715^{iv}.

The gears of gears sets 714, 715, when coupled with the engine shaft 702, represent the different speed ratios of the transmission that the can be selected; namely first speed ratio selecting gear 715^{iv}, second speed ratio selecting gear 714^{iv}, third speed ratio selecting gear 715ⁱⁱⁱ, fourth speed ratio selecting gear 714ⁱⁱⁱ, fifth speed ratio selecting gear 715ⁱⁱ, sixth speed ratio selecting gear 714ⁱⁱ, seventh speed ratio selecting gear 715ⁱ or eighth speed ratio selecting gear 714ⁱ.

As known, a gear of the gears sets 714, 715 may be selected by a synchronizer 717 configured to slide on the shafts 711, 712 and to couple the latter with the chosen gear. Preferably the even shaft 711 may comprise two synchronizers 717 interposed respectively between the gear 714ⁱ - 714ⁱⁱ and 714ⁱⁱⁱ - 714^{iv.} Similarly, the odd shaft 712 may comprise two synchronizers 717 interposed respectively between the gear 715ⁱ - 715ⁱⁱ and 715ⁱⁱⁱ - 715^{iv}.

Each gear of the gear sets 714, 715 is coupled with an intermediate geared shaft 719 which may be directly connected with the output shaft 703.

The intermediate geared shaft 719 may be coupled directly to the output shaft 703 or, preferably, through an additional stage, namely a range selecting stage 720. The range selecting stage 720 is configured to couple the intermediate gearing 719 with the output shaft 703 by choosing a plurality gear ratios which can be combined with the above described speed ratios.

For example, the range selecting stage 720 comprises a first gear 722', a second gear 722'' and a third gear 722‴ having different dimensions and configured to couple with different portions of the intermediate gearing 719 thanks to respective synchronizers 717.

Other stages may be provided between the range selecting stage 720 and the output 703, e.g. a creeping stage, in order to further modulate the torque and the velocity of the output shaft 703 with respect to the engine shaft 702.

The above described clutches 705-708 and synchronizers 717 can be selected by respective actuators (not illustrated) controlled by tractor controller 250, which is configured to control the above cited elements of the transmission 701 after a direct input of the user of the tractor 100 or automatically thanks to a specific program, which can be implemented on the tractor controller 250.

An example of typical operations of the described transmission 701 is described in the following.

A first example of operation is the take-off of transmission 701 from a park condition of the tractor 100 in which the park brake is engaged and the engine is off.

The user switch on the engine and take the shuttle lever 122 from park to forward position; in this condition, clutches 705 and 706 are still open and the engine shaft 702 starts to rotate, consequently all the elements which are directly coupled to the engine shaft 702 (e.g. the input stage 704) are rotating. A gear between the odd shaft 712 or even shaft 711, e.g. gear 714^{iv} of even shaft 711, is selected thanks to a synchronizer 717, a gear of the range selecting stage 720, e.g. gear 722', is selected thanks to a synchronizer 717 and even clutch 707 is engaged. In this way there is a continuous mechanical path between the output shaft 703 to even shaft 711 thanks to intermediate gearing shaft 719. For example, moving a lever, the forward clutch 704 is engaged and the housings 710' and 710'' start to rotate and make, thanks to even clutch 707, to rotate the even shaft 711 and consequently the intermediate geared shaft 719 and the output shaft 703 thanks to the mechanical connection which is established from engine shaft 702 to output shaft 703.

A second example of operation is the shift of gear, e.g. passing from gear 714^{iv} to gear 715ⁱⁱⁱ when the vehicle is moving, e.g. forward.

Since the vehicle is moving forward the mechanical path between the engine shaft 702 and the output shaft 703 is the same as described in the previous example. Therefore, forward clutch 705 is engaged, even clutch 707 is engaged, in order to connect even shaft 711 to the engine input shaft 702 and gears, e.g., 714^{iv} and 722' are selected to connect the even shaft 711 to the output shaft 703 via the intermediate geared shaft 719. The user may upshift (or downshift) by selecting the desired ratio, e.g. by selecting a button on a handle. The tractor 100 may moreover be provided by a dedicated program configured to recognize the resistant torque at the output shaft 703 and automatically change to a suitable ratio.

Supposing that the user decided to upshift to gear 715ⁱⁱⁱ, gear 715ⁱⁱⁱ is preselected thanks to synchronizer 717 and therefore the odd shaft 712 starts to rotate at same velocity of even shaft 711. The odd clutch 708 is therefore dumped and the even clutch 707 is engaged. By "switching" from odd clutch 708 to even clutch 707, a new mechanical path between engine shaft 702 to output shaft 703, passing from even shaft 711 and intermediate geared shaft 719, is established. In this way there is not a "hole" of the torque transmitted between the engine shaft 702 and the output shaft 703 during the change of the gear shift.

A third example of operation is switching from forward and rearward (or vice versa), also known as "shuttle shift".

When the tractor 100 is moving is moving forward, e.g. using the configuration of transmission 101 after the take-off described above in the first example, the forward clutch 705 is dumped and simultaneously the rearward clutch 706 is engaged. In this way the tractor 100 starts to move with the same gear but rearwards.

According to the present invention, the method of controlling the above described transmission 701 by the tractor controller 250 to stop the tractor 100 and hold the tractor 100 in place, in particular with an engine of the tractor 100 still running, occurs by modulating the forward clutch 705 and rearward clutch 706.

In particular, the method comprises:
- a first step in which the vehicle speed is reduced until a predetermined or pre-set velocity or speed while a gear of said plurality of gears 714, 715 is coupled so said shaft 719 to give a driving torque to one of said first shaft 711 and second shaft 712;
- a second phase in which the tractor 100 is maintained at said predetermined speed;
- a third phase in which a gear of said plurality of gears 714, 715 of the other of said first shaft 711 and second shaft 712 is engaged;
- a fourth phase in which said first clutch 707 and second clutch 708 are both engaged or modulated in order to lock the transmission 701; and
- a fifth phase in which the forward clutch 705 and rearward clutch 706 are disengaged or modulated so that said input shaft 702 is consequently decoupled form transmission 701.

A non-limiting detailed example of operation of the above mentioned method is the following.

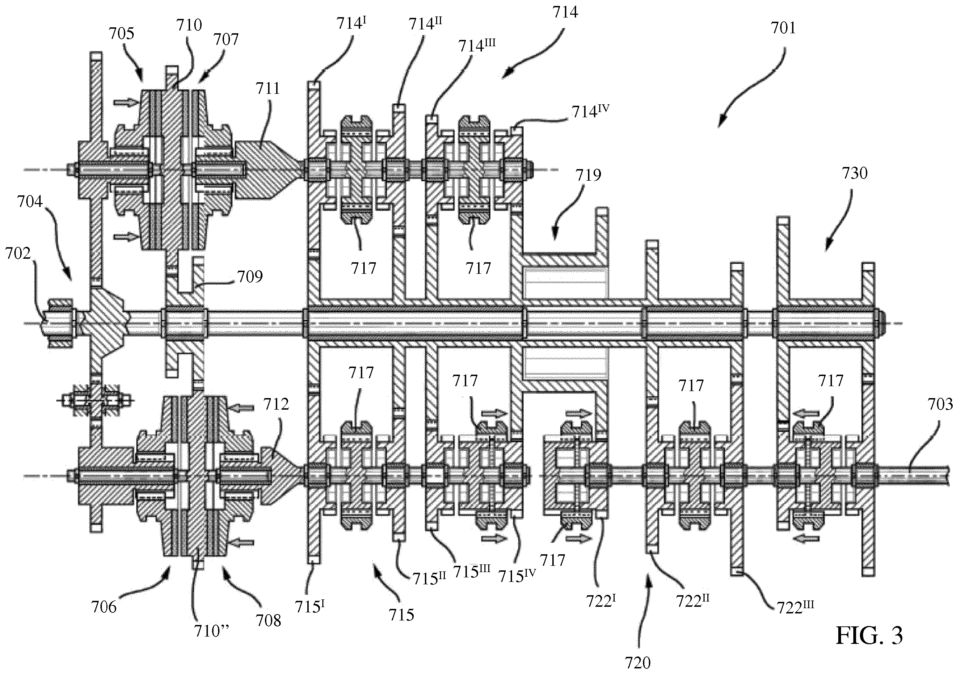

In a phase of operation of transmission 701 of the work vehicle (figure 3), the vehicle is moving at a constant speed, for instance using the first speed ratio combined with the first gear ratio of the gear selecting range 720. In such configuration, the forward clutch 705 is engaged, the odd clutch 708 is engaged and the synchronizers 717 select the gears 715^{iv} and 720'. The torque applied by the engine shaft 702 goes therefore through the forward clutch 705, housings 710', 710'', the odd clutch 708, the odd shaft 712, the gear 715^{iv}, the intermediate geared shaft 719, the range selecting stage 720 and then to the output shaft 703 and the driving gears.

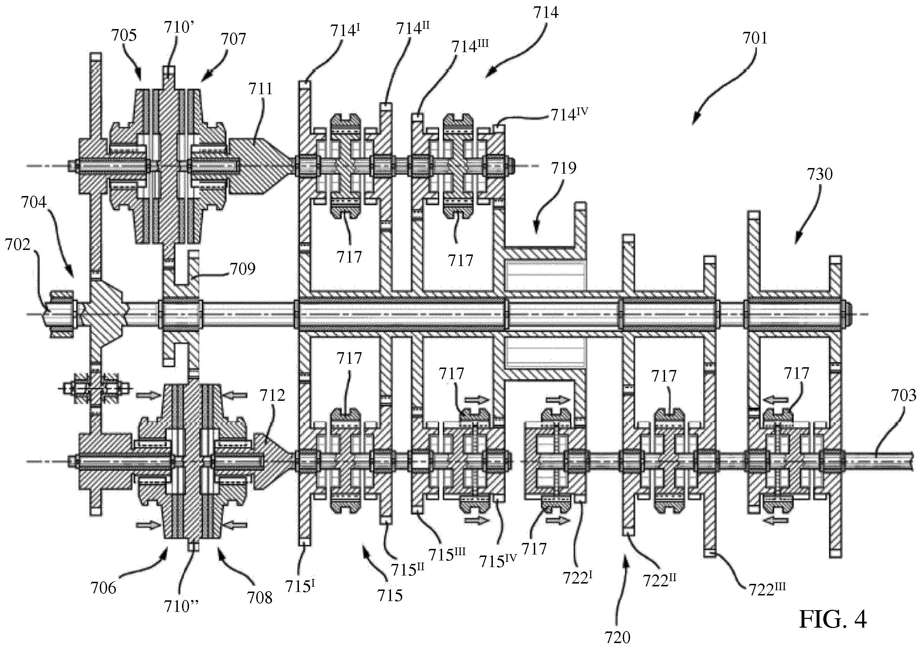

In a first phase of the above mentioned method (figure 4), when the operator or controller requests vehicle deceleration, the forward clutch 705 will be disengaged and the rearward clutch 706 will be engaged. The odd clutch 708 is maintained engaged and the synchronizers 717 continue to select the gears 715^{iv} and 720'.

In this way the rearward clutch 706 uses the energy of the engine shaft 702 to decelerate the output shaft 703 by slipping and therefore dissipating the energy stored in transmission 701. In particular, the torque applied by the engine shaft 702 goes therefore through the rearward clutch 706 and housings 710', 710" but meet the resistance of the tractor 100, which is still moving, and therefore housing 710" and the odd clutch 708 slip; by slipping, they act like a braking couple on transmission 701 and therefore decelerates the vehicle.

The aforementioned configuration is maintained till the tractor 100 arrives to a preset value of velocity or till the tractor 100 is at stand-still. The preset velocity may be lower than 0,5 km/h and preferably about 0,3 km/h. More preferably the tractor 100 is at stand-still.

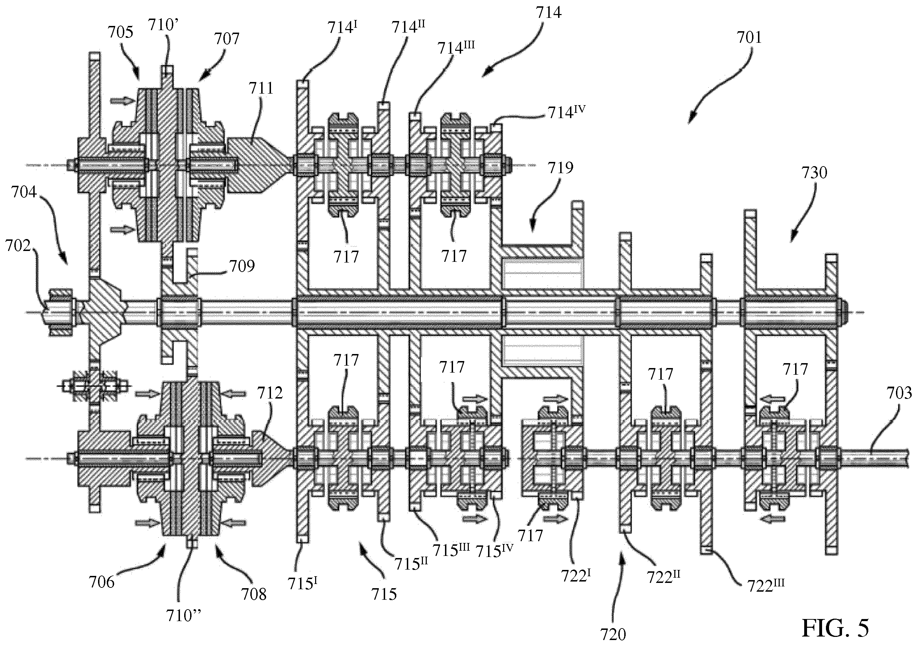

In a second phase of the above mentioned method (figure 5) the forward clutch 705 and the rear clutch 706 have been engaged together in order to maintain the tractor 100 at stand-still or at the preset velocity. The odd clutch 708 is maintained engaged and the synchronizers 717 continue to select the gears 715^{iv} and 720'. In this way the preset value of velocity (or the stand-still phase) is maintained by the balance between the torque added by the forward clutch 705 and the dissipation given by the rearward clutch 706. In this situation housings 710' slips with forward clutch 705 and housing 710" slips with odd clutch 708. The balance between the driving torque given by forward clutch 705 and the braking torque given by rearward clutch 706 guarantees the standstill (or preset velocity) condition of the tractor 100. Obviously, if the tractor 100 is moving at a preset value of velocity, the braking torque applied by the rearward clutch 706 will be greater with respect to the braking torque applied if the tractor 100 is still.

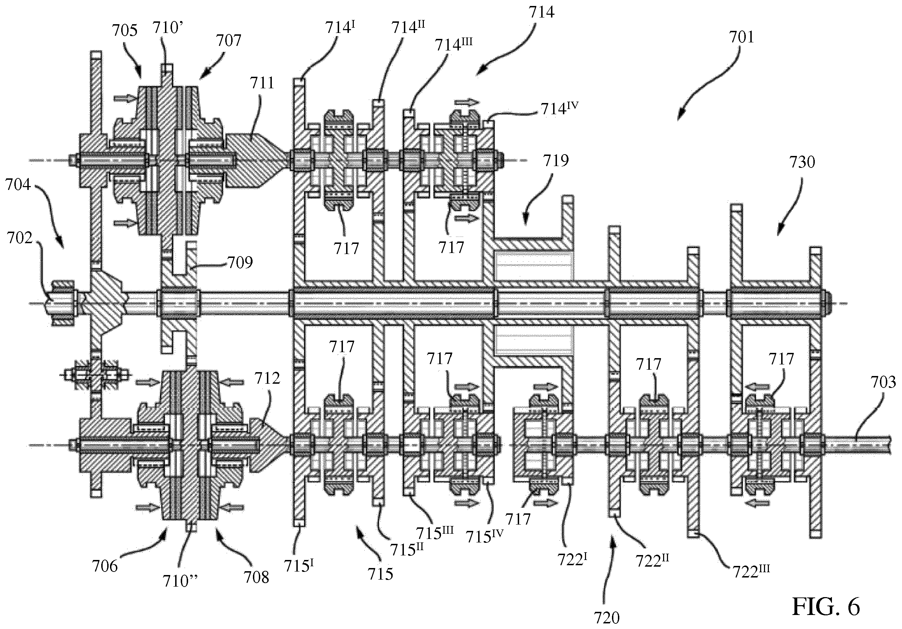

In a third phase of the above mentioned method (figure 6) one the gears 714, for instance gear 714^{iv}, is engaged through the activation of the respective synchronizer 717. The forward clutch 705 and the rear clutch 706 are maintained together engaged. The odd clutch 708 is maintained engaged and the synchronizers 717 continue to select the gears 715^{iv} and 720'. Dynamically, the situation of the previous velocity maintenance phase is the same.

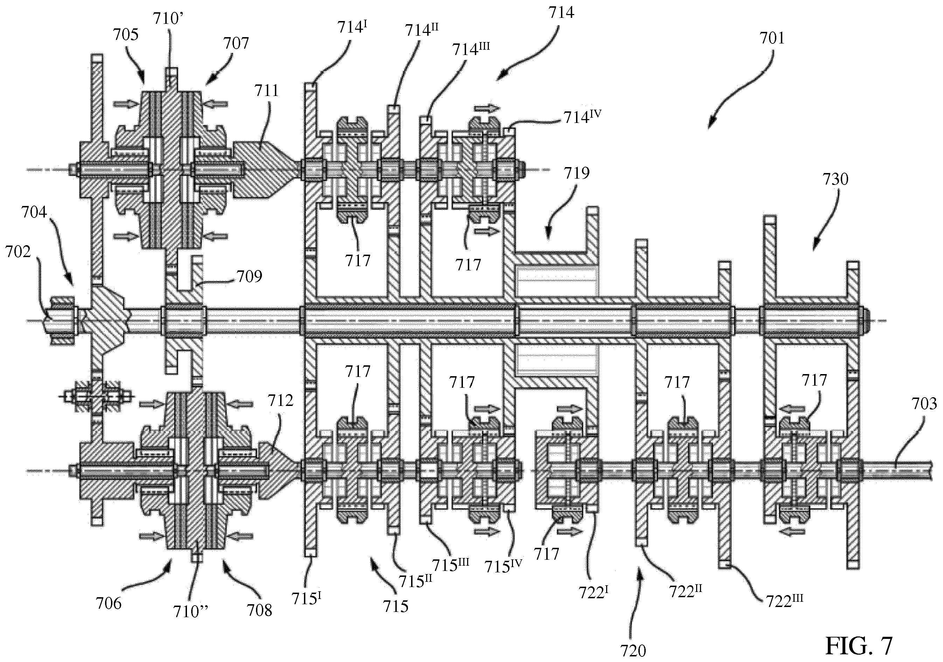

In a fourth phase of the above mentioned method (figure 7), the even clutch 707 is engaged. The forward clutch 705 and the rear clutch 706 are maintained together engaged. The odd clutch 708 is maintained engaged and the respective synchronizers 717 continue to select the gears 714^{iv}, 715^{iv} and 720'. The even clutch 707 is engaged with a preset pressure slope in order to gently lock the transmission 701.

By selecting the even clutch 707, the intermediate geared shaft 719 is locked because of a mechanical short circuit which is generated between the odd shaft 712 and the even shaft 711 through gears 714^{iv}, 715^{iv} and housings 710', 710'' via intermediate gear 709. In this way the intermediate geared shaft 719 is locked and the output shaft 703 is locked consequently, being connected to the intermediate gearing 719 by at least the range selecting stage 720. Obviously, if the tractor 100 is not at stand-still but moving, the remaining kinetic energy of transmission 701 will be dissipated by the slipping of odd clutch 708 during the engagement of even clutch 707.

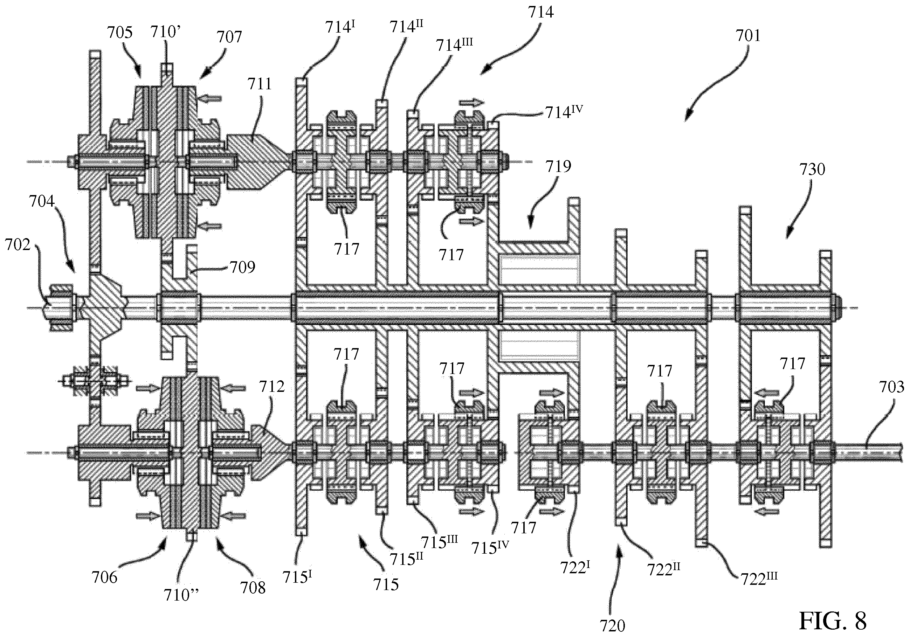

In a fifth phase of the above mentioned method phase of operation of the transmission 701 (figure 8), the transmission 701 is locked and therefore the forward clutch 705 and the rearward clutch 706 can be disengaged. The even clutch 707 and odd clutch 708 may preferably be maintained engaged and the respective synchronizers 717 continue to select the gears 714^{iv}, 715^{iv} and 720'. In this way the engine shaft 702 is totally decoupled from transmission 701 and no energy is wasted for slipping in rearward clutch 706. Clutches 707 and 708 are maintained engaged in order to avoid an overload on locking gear 714^{iv.}

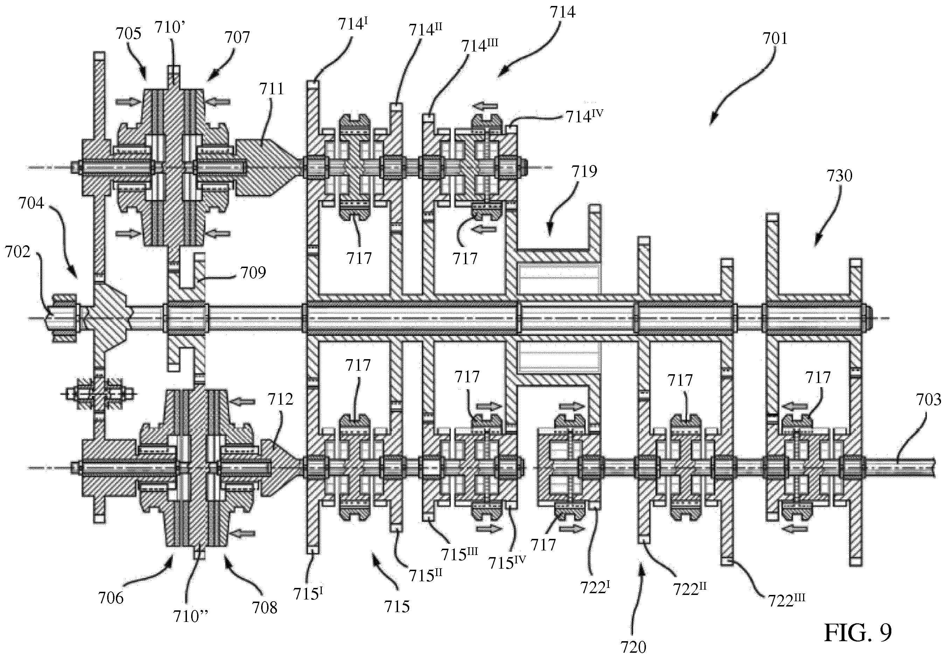

The transmission 701 can be unlocked from the locked state obtained by the above described method thanks to the following unlocking method comprising the phase disclosed in figure 9. The forward clutch 705 is engaged and the even clutch 707 is disengaged simultaneously. In this way the driving torque transmitted by the forward clutch goes through transmission 701 to the output shaft 703 as in standard operation of the transmission because the mechanical short-circuit caused by the coupling of the even clutch 707 is removed.

The above described method may be advantageously implemented on a program in the control unit of the aforesaid elements of transmission 701 and can be therefore actioned automatically without user input.

In view of the foregoing, the advantages of the transmission 701 according to the present invention, and of the functioning method thereof, are apparent.

In fact, the functioning of the transmission 701 according to the invention permits to completely decouple the engine shaft 702 from the transmission and therefore the clutches do not dissipate uselessly energy. In this way the tractor 100 can be maintained in the stopped condition for all the time needed, in particular for all the time needed for completing a wrapping sequence of a bale B.

Since the transmission 701 can be firmly locked, the tractor 100 may be stopped and maintained still also on slopes.

Moreover, since the passive load of the transmission 701 is not connected to the engine input shaft 702, the fuel consumption of the engine is reduced.

The locking condition is obtained by controlling clutches 705 and 706, i.e. by controlling pressure of the hydraulic fluid inside them. Such control is very simple and may be easily implemented.

The optional presence of a range selecting stage 720 of a further creeping stage does not interfere the mechanical short circuit which allows the locking of the dual clutch transmission 701, because the mechanical short circuit is closed only between the gears 714, 715 of the first and second shafts 711, 712, via shaft 719 and the first and second clutches 707, 708. Advantageously the method can be automated and can be used automatically in a totally automatic tractor 100.

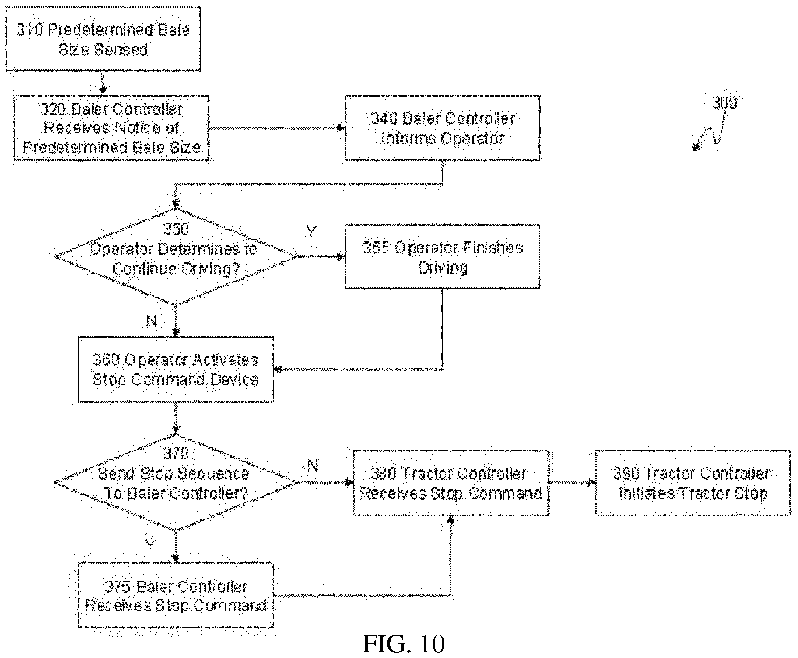

Figure 10 shows a sequence for stopping a tractor 100 prior to initiating a bale wrapping sequence. Method 300 utilizes bale B sense data to inform an operator to stop the tractor 100 and initiate a stop in order to wrap a bale B.

At step 310, bale controller 210 receives sensed data from one or more bale sensors 274 in the baler 10, as for example relayed by the relay unit 270, with regards to bale size. In this embodiment, the bale sensors 274 sense when the bale has surpassed a predetermined bale B size, wherein the bale B is at a size sufficient for wrapping and then ejection. The various types of sensors that may be used in the present embodiment are described above in relation to FIG. 1.

At step 320, the baler controller 210 receives information from the one or more bale sensors 274 that a predetermined bale size has been reached and that the bale is at a sufficient size for wrapping then ejection. In other embodiments of the invention, the one or more bale sensors 274 send a discrete signal to the bale controller 210 signaling that the bale B is at the predetermined size. In other embodiments, bale controller 210 will determine whether sensed information pertaining to bale size means a predetermined size has been reached. The bale controller 210 may be configured such that the baling capacity of the baler 10 is preprogrammed and stored in a memory on the bale controller 210. In other embodiments of the invention, the operator might simply configure the bale controller 210 with a predetermined size through the bale controller interface. In other embodiments, the operator may inform the bale controller 210 of the type of crop material or the width and height of the windrow. The bale controller 210 could then calculate the projected remaining capacity of the baler 10 as sensed data is received at the bale controller 210 and thus set the predetermined size. In other embodiments, the bale controller 210 might simply pass on a value from the one or more bale sensors 274 so that the operator might be informed of the bale B size.

After the bale B has reached a predetermined size and the baler controller 210 has received the information, the baler controller 210 informs the operator that the predetermined size has been reached in step 340. In some embodiments of the invention, the signal may be an audible alarm, such as a beep, chirp, or ring. In other embodiments of the invention, the baler controller 210 might provide a computer generated voice update, informing the operator that the predetermined size as been reached. In other embodiments of the invention, the baler controller 210 may inform the operator through visual cues or a visual alarm. In some embodiments of the invention, certain colored glass bulbs would illuminate to reflect that the predetermined size has been reached. In other embodiments of the invention, a bulb or LED would blink or strobe to alarm the operator. In other embodiments of the invention, text or a graphical icon or graphical symbol would display on a graphical interface to inform the operator.

After the operator has been notified by the baler controller 210 that a predetermined size of the bale has been reached, the operator determines whether to continue to drive the tractor in step 350. Though the operator has been informed that the predetermined size has been reached, the operator may want to continue to operate the tractor 100. For example, the operator may see that only a small amount of windrow is lined ahead of the tractor 100. The operator might determine to then continue driving and baling the windrow beyond the predetermined bale size so as to finish picking up the remaining windrow. As another example, the operator may want to continue driving based on the conditions of the field and the location of the tractor 100 in the field. For example, the operator might want to drive the tractor 100 beyond a slide slope or out of a wet area in the field. If the operator chooses to continue driving, then the operator finishes driving the tractor 100 in step 355.

When the operator finishes driving in step 355 or has determined to stop driving in step 350, then the operator activates a stop command device 212 in step 360 to initiate automatic stopping of the tractor. In the present embodiment of the invention, the stop command device 212 is located in the cabin 120. The stop command device 212 may be located near the steering wheel 121, on the baler controller 210, on the tractor controller 250, or in any other accessible location to the operator. For example, the device 212 may simply be a button on the baler controller 210 labeled as "tractor stop". The stop command device 212 may also be the shuttle lever 122, activated when the lever is moved in a certain order to various positions. Other variable types of stop command devices 212 and locations are described in reference to FIG. 1 above.

As shown in FIG. 10, step 370 is a decision step for where to send the operator initiated stop command signal from the stop command device 212 in step 360. If the stop command device 212 is connected to the baler controller 210, and not the tractor controller 250, then the initiated stop sequence is received by the baler controller 210 in step 375. If the stop command device 212 is connected to the tractor controller 250, then the stop sequence signal is transmitted to the tractor controller as shown in step 380. If the baler controller 210 receives the command, in step 375, then the baler controller 210 subsequently relays the command to the tractor controller 250 in step 380. The baler controller 210 may send the relay along a communication link, as for example in this embodiment across the CAN-bus 240. In some embodiments of the invention, wherein the tractor controller 250 and baler controller 210 are integrated in an ISOBUS system, then the two would communicate on the ISOBUS network. At step 390, following the tractor controller 250 receiving the stop command in step 380, the tractor controller 250 initiates an automatic stop of the tractor 100 by controlling the transmission 701 modulating the forward clutch 705 and rearward clutch 706 in order to stop (and subsequently restart) the tractor 100.

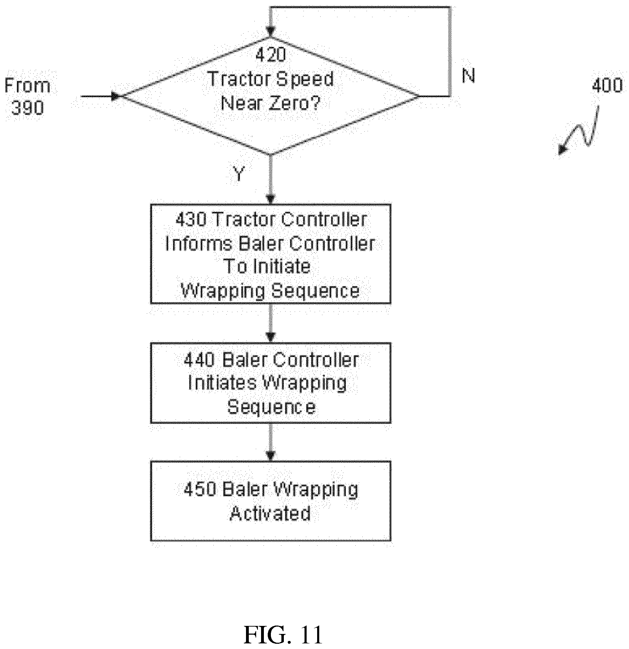

Figure 11 shows a sequence 400 of wrapping a bale B according to the present invention and following the sequence of initiating a tractor stop in Figure 10. Sequence 400 utilizes tractor speed sense data for when a tractor 100 has reached a predetermined speed to then initiate bale wrapping in the baler 10.

As shown in step 420, the tractor controller 250, through feedback from tractor speed sensors determines whether the speed of the tractor is approximately 0 mph. Tractor speed sensors may include wheel speed sensors or radar ground sensors. Preferably, the tractor controller 250 is connected or integrated with, as for example in ISOBUS, a mounted GPS unit. A GPS unit calculating speed of the tractor can forward the analog or digital speed information to the tractor controller 250. The speed of the tractor may be electronically forwarded from the tractor controller 250 to the display unit 123 so the operator can see the speed. The tractor controller 250 may determine whether the decelerating tractor speed has crossed a deadband value at or around 0 mph. For instance, the deadband value is +/-0.15 mph. In other embodiments, the deadband value may be set and/or adjusted by the operator, or other deadband values may be incorporated in different ways. When the deadband value is achieved or crossed, or the speed is around (or equal to) 0 mph, the tractor controller 250 informs the baler controller 210 to initiate the wrapping sequence in step 430. Otherwise, the tractor controller 250 continues to monitor the tractor speed until a zero value, or in some embodiments of the invention a dead band around 0 mph, is reached.

At step 430, the tractor controller 250 informs the baler controller 210 that the baler controller 210 can initiate the wrapping sequence of the bale B in the baler 10. The tractor controller 250 may also provide the baler controller 210 with information pertaining to the zero speed or value approximately near zero speed for the bale controller 210 to determine when to initiate the bale wrapping. Subsequent to receiving the information from the tractor controller 250, the baler controller 210 initiates a wrapping sequence in the baler 10 at step 440, sending a command to the wrapping drive system 290 in the baler 10. At some time after the baler controller 210 initiates the sequence, baler wrapping is activated in step 450 wherein the wrapping drive system 290 automatically begins applying wrapping from a net roll onto the bale B in the bale chamber of the baler 10. Preferably, the wrapping of a bale B does not begin until the tractor 100 has either stopped or achieved a speed value approximately near stop or 0 mph. By synchronizing the tractor stop with bale wrapping initialization, any essential downtime in baling productivity is further minimized.

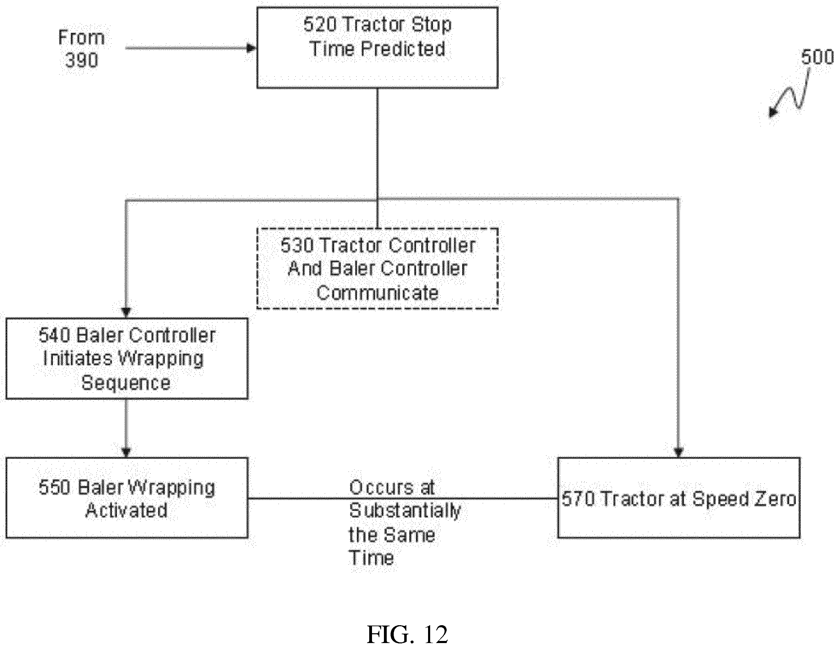

Figure 12 shows an alternative sequence 500 of wrapping a bale B in at least one other embodiment of the present invention following the sequence of initiating a tractor stop in Figure 10.

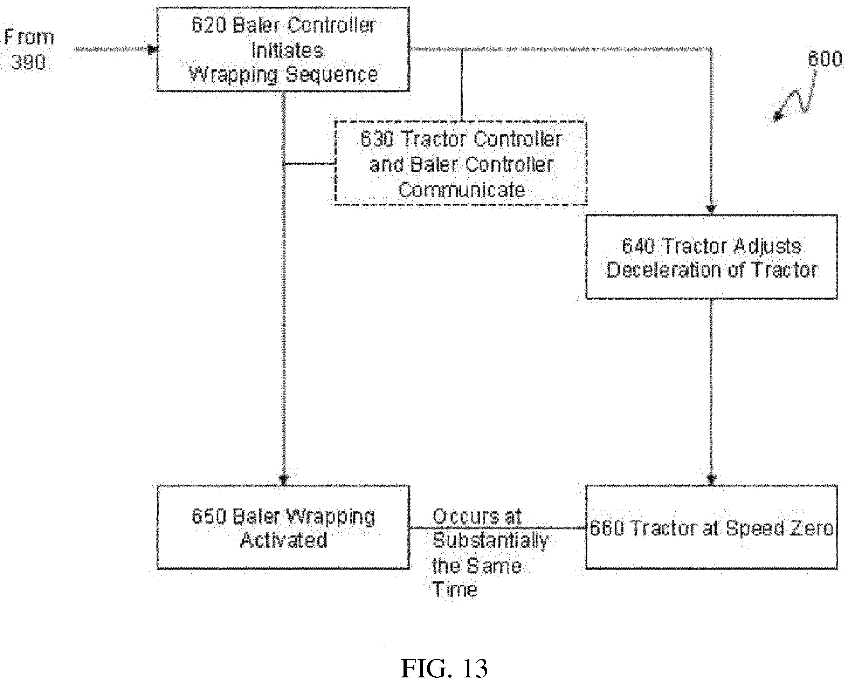

Sequence 500 utilizes tractor speed sense data to determine when baler wrapping should begin so that baler wrapping occurs approximately at the same time the tractor 100 stops. The wrapping system 11, 12, 13 may take approximately one to two seconds to begin active bale wrapping after receiving a command signal from a baler controller 210. In other balers 10, the time between a command sent from the baler controller 210 and the wrapping beginning in the baler 10 may be longer or shorter. To conserve time and improve the efficiency of baling in relation to tractor motoring, the following steps shown in Figure 12, and steps alternatively shown in Figure 13, serve to accomplish a tractor 100 stopping still and the beginning of active wrapping occurring at approximately the same time.

After the tractor controller 250 initiates the tractor 100 to stop in step 390, a predicted stop time for the tractor 100 is determined as shown in step 520. The stop time is the time from the initialization of the stop sequence from the tractor controller 250 in step 390 until the tractor speed is measured at 0 mph, or within a deadband value approximate to 0 mph. For example, a tractor speed within a deadband value of +/- 0.15 mph signifies that the tractor 100 has stopped. A processor of the tractor controller 250 will calculate the stopping time of the tractor 100 from the time the stop sequence was initiated in step 390. Moreover, sensors located in or around the tractor transmission system 260 provide sensed speed of the tractor 100 continuously to the tractor controller 250. In particular, the sensors provide at least one sensed speed value at or approximate to the time the tractor controller 250 initiates the tractor stop sequence in step 390. Preferably, the baler controller 210 may calculate the predicted stop time of the tractor 100. In the case where the baler controller 210 calculates the predicted stop time, the tractor controller 250 will pass speed information obtained by the transmission speed sensors to the baler controller 210 either continuously or at least at or around the time the tractor controller 250 informs the baler controller 210 that the stop sequence was initiated in step 390. A GPS unit, or any other alternative processing device connected by CAN-bus or ISOBUS, will calculate the predicted stop time of the tractor 100 and relay the information back to the tractor controller 250 or baler controller 210.

The predicted stop time of the tractor 100 may be calculated by the tractor controller 250 or bale controller 210 by various means. For example, the stopping time may be predicted from the measured deceleration rate and current sensed speed of the tractor 100. According to another example, a predicted stopping time may be calculated based on previous stop times when the tractor stop sequence was initiated at similar speeds. According to a further example, either controller calculating the predicted stop time, may utilize its internal memory. Memory would store information pertaining to initiated stop sequence times and the sensed tractor speed at the initiated stop sequence time. Memory would also store the time the tractor 100 actually stopped moving at or approximately near zero mph. Memory would also store calculated differences between the initiated stop sequence time and actual tractor stop time. The controller, with speed and times stored in memory, may retrieve stored speed and time information and compare with sensed speed presently received by the tractor controller 250 when the tractor controller 250 initiated the tractor stop in step 390. If the sensed speed matches exactly or approximate to stored speed in memory, the tractor controller 250 or baler controller 210, can predict the stopping time of the tractor 100 based on the time differences previously calculated and stored in either controller's memory.

Once a tractor stop time is predicted in step 520, the baler controller 210 subsequently initiates a wrapping sequence in step 540. The wrapping sequence is initiated at a fixed time after the tractor controller 250 initiates the stop sequence in step 390 or after the tractor stop time is predicted in step 520. The baler controller 210 may calculate when the baler controller 210 should initiate the wrapping sequence based on the predicted stop time. In some embodiments of the invention, the bale wrapper start time is calculated to ensure that the bale wrapper activation and tractor stop are achieved synchronously. When the tractor stop time is calculated by the baler controller 210, or calculated and forwarded to the baler controller 210 from the tractor controller 250, the baler controller 210 utilizes the predicted stop time to determine baler wrapping activation initiation. Information stored in memory of the baler controller 210 may contain the time difference between a baler controller 210 initiating a wrapping sequence and the wrapping sequence actually beginning This information, used with the tractor predicted stop time, is utilized by a processor in the baler controller 210 to determine the time at which the baler controller 210 will initiate the wrapping sequence so that the baler wrapping activation and tractor stop occur at the same time.

Shown in step 530 at any time prior to, during, or following the prediction of a tractor stop time in step 520, the tractor controller 250 and baler controller 210 may communicate information about timing of tractor stop, tractor speed, timing of bale wrapping, or any other information to achieve an activated bale wrapping to occur at the same time the tractor 100 reaches a speed at or approximate to 0 mph. In particular, the controllers may communicate one or more times when either the tractor stop time is predicted, the baler wrapper start time is predicted, or at anytime after and up until activation of baler wrapping and tractor stopping occurs.

Subsequent to initiating the wrapping sequence, baler wrapping is activated and begins in step 550. Bale wrapping begins at the same time or approximately to the time the tractor 100 comes to a stop, at or approximate at 0 mph, in step 570.

Figure 13 shows an alternative sequence 600 of wrapping a bale B following the sequence of stopping a tractor 100 shown in Figure 10. Sequence 600 utilizes tractor speed sense data to regulate tractor speed so that baler wrapping occurs approximately at the same time the tractor stops.

At some fixed time after the tractor controller 250 initiates a tractor stop sequence in step 390, the baler controller 210 initiates the wrapping sequence in the baler 10 at step 620. At some fixed time after the baler 10 controller initiates the wrapping sequence, baler wrapping begins inside the baler at step 650.

As shown in step 630, at any time prior to, during, or after initiating the wrapping sequence in step 620, the tractor controller 250 and baler controller 210 may communicate with each other. At step 630, the baler controller 210 will inform the tractor controller 250 that the bale wrapping was initiated in step 620. The baler controller 210 may also inform the tractor controller 250 of the time difference, stored in a memory of the baler controller 210, for previous baling processing, between a baler initiated wrapping start sequence in step 620 and the start of the wrapping activation in the baler in step 650. In other embodiments of the invention, the tractor controller 250 may store time difference information pertaining to baler wrapping processing in tractor controller memory. The tractor controller 250 may store the time difference between a tractor initiated stop in step 390 and baler controller initiation of wrapping start in step 620. The tractor controller 250 may also store the time difference between the baler controller 210 initiated wrapping start in step 620 and the beginning of the wrapping activation at step 650.

The tractor controller 250 then utilizes information pertaining to tractor stop and/or wrapping sequence timing to adjust the deceleration of the tractor in step 640. According to the present invention, the tractor controller 250 controls the transmission 701 by modulating the forward clutch 705 and rearward clutch 706 for decelerating the tractor 100. The tractor controller 250 determines the preferable rate of deceleration from the sensed speed to accurately stop the tractor 100 at or approximate to the start of baler wrapping activation in step 650. When the preferred rate of deceleration is achieved, the tractor controller 250 controls the transmission 701 by modulating the forward clutch 705 and rearward clutch for stopping the tractor 100 (at or approximate to 0 mph) in step 660, synchronizing with the beginning of baler activation in step 650.

The advantages offered by a combination of a tractor 100 and a baler 10, and of the functioning method thereof, are apparent from the above description.

In fact, the functioning of the transmission 701 according to the invention permits to completely decouple the engine shaft 702 from the transmission and therefore the clutches do not dissipate uselessly energy. In this way the tractor 100 can be maintained in the stopped condition for all the time needed, in particular for all the time needed for completing a wrapping sequence of a bale B.

Since the transmission 701 can be firmly locked, the tractor 100 may be stopped and maintained still also on slopes.

Moreover, since the passive load of the transmission 701 is not connected to the engine input shaft 702, the fuel consumption of the engine is reduced.

The locking condition is obtained by controlling clutches 705 and 706, i.e. by controlling pressure of the hydraulic fluid inside them. Such control is very simple and may be easily implemented.

The optional presence of a range selecting stage 720 of a further creeping stage does not interfere the mechanical short circuit which allows the locking of the dual clutch transmission 701, because the mechanical short circuit is closed only between the gears 714, 715 of the first and second shafts 711, 712, via shaft 719 and the first and second clutches 707, 708. Advantageously the method can be automated and can be used automatically in a totally automatic tractor 100.

In this respect, it must be observed that the provisions of the present invention allow to obtain an automated tractor stop integrated with bale wrapping functionality that incorporates operator notification and interaction during the tractor stop process.

In particular, according to the teachings of the present invention, the operator does not need to accomplish all the repetitive and time-consuming tasks that are required in the agricultural balers known at the state of the art.

The combination of a tractor and a baler, and the functioning method thereof, described herein by way of example may be subject to many possible variations without departing from the novelty spirit of the inventive idea; it is also clear that, in the practical implementation of the invention, the illustrated details may have different devices or replaced with other technically equivalent elements, as well as providing different sequences of steps.

For example, the above described method can be implemented in a DCT transmission comprising different elements with respect to the described ones.

According to a variant embodiment of the present invention, a first decelerating phase may also be reached simply thanks to standard braking systems.

Moreover, the intermediate gear 9 may have the same gear ratio with respect to housings 710' and 710'' or an additional creeping stage may be present between the range selecting stage 720 and the output shaft 703.

According to the present invention, any couple of gears of the plurality of gears 714, 715 may be used to short-circuit transmission 701, example gears 714ⁱ and 715ⁱ, 714ⁱⁱ and 715ⁱⁱ or 714ⁱⁱⁱ and 715ⁱⁱⁱ or a different combination of one gear 714 of even shaft 711 and an odd gear 715 of the odd shaft 712.

It can therefore be easily understood that the present invention is not limited to the above-described combination and method, but may be subject to many modifications, improvements or replacements of equivalents parts and elements without departing from the scope of protection defined by the following claims.

## Claims

1. A combination of a tractor (100) and a baler (10) for baling harvested crop, said combination comprising:
- at least one bale sensor (274) to detect whether a bale (B) has reached a predetermined size in a baling chamber of the baler (10), in particular said at least one bale sensor (274) being located in proximity to said baling chamber;
- a baler controller (210), in particular located in the tractor (100), configured for receiving information from said at least one bale sensor (274) pertaining to whether the bale (B) reached the predetermined size and for initiating bale (B) wrapping;
- a tractor stop command device (212) located in the tractor (100) for activation by an operator after the predetermined bale (B) size has been reached;
- at least one speed sensor of the tractor (100) to detect the speed of the tractor (100);
- a tractor controller (250) connected to said stop command device (212) and to a tractor drive system, said tractor controller (250) comprising a processor to generate a value regarding a pre-set speed from a speed information detected by said at least one speed sensor;
- a communication link between the baler controller (210) and the tractor controller (250), wherein the tractor controller (250) informs the baler controller (210) to initiate bale wrapping at said generated value,
in which said tractor (100) comprises a dual clutch transmission (701) comprising:
- an engine input shaft (702) configured to be coupled to the output of an engine of said tractor (100),
- an intermediate geared shaft (719) configured to be coupled to said drive system,
- a forward clutch (705) and a rearward clutch (706), each configured to be coupled to the engine input shaft (702);
- a first intermediate shaft (711) and a second intermediate shaft (712) comprising a plurality of gears (714, 715), said first and second intermediate shafts (711, 712) being configured to be coupled, via respective first clutch (707) and second clutch (708), to said forward clutch (705) and to said rearward clutch (706) and being configured to be coupled to said intermediate geared shaft (719) defining with one of said gears (714, 715) a predetermined speed ratio between said engine input shaft (702) and said intermediate geared shaft (719), each of said gears (714, 715) defining a different predetermined speed ratio among them between said engine input shaft (702) and said intermediate geared shaft (719),
wherein the tractor controller (250) is configured to reduce the speed of the tractor (100) for reaching said pre-set speed and generating said value apt to initiate bale wrapping by modulating both said first clutch (707) and said second clutch (708) in order to lock said dual clutch transmission (701);
said combination of a tractor (100) and a baler (10) being **characterized in that** said tractor controller (250) is configured to reduce the speed of the tractor (100) by modulating one of said forward clutch (705) and said rearward clutch (706) so that it is disengaged and the other of said forward clutch (705) and said rearward clutch (706) is modulated in order to give a braking torque to said one of said first and a second intermediate shaft (711, 712) until said pre-set speed of said tractor (100) is reached.

2. A combination of a tractor (100) and a baler (10) according to claim 1, **characterized in that** said tractor controller (250) is configured to modulate one of said forward clutch (705) and said rearward clutch (706) to give a driving torque to the other of said first and a second intermediate shaft (711, 712) in order to balance the braking torque given by the other of said forward clutch (705) and said rearward clutch (706) and maintain said work vehicle at said pre-set speed.

3. A combination of a tractor (100) and a baler (10) according to any of the preceding claims, **characterized in that** said tractor controller (250) is configured to create a mechanical short circuit between the gears (714, 715) of said first and second shafts (711, 712), via said intermediate geared shaft (719) and said first and second clutches (707, 708).

4. A combination of a tractor (100) and a baler (10) according to any of the preceding claims, **characterized in that** said clutch transmission further comprises a range selecting stage (720) coupled to said intermediate geared shaft (719) and said drive system of the tractor (100), the lock of said dual clutch transmission (701) being obtained by a mechanical short circuit between the gears (714, 715) of said first and second shafts (711, 712), via said intermediate geared shaft (719) and said first and second clutches (707, 708).

5. A combination of a tractor (100) and a baler (10) according to any of the preceding claims, **characterized in that** said tractor controller (250) is configured to unlock said dual clutch transmission (701) by simultaneously selecting said forward clutch (705) and disengaging said other of said first and a second intermediate shaft (711, 712) from said forward and rearward clutches (705, 706).

6. A combination of a tractor (100) and a baler (10) according to any of the preceding claims, **characterized in that** it further comprises a baler operator interface connected to the baler controller (210) to transmit to an operator a notification from the baler controller (210) that the predetermined bale size has been reached.

7. A combination of a tractor (100) and a baler (10) according to any of the preceding claims, **characterized in that** it further comprises a tractor operator interface connected to the tractor controller (250) to transmit to an operator a permission request to initiate a tractor stop prior to the tractor controller (250) initiating the tractor stop.

8. A method for baling harvested crop comprising a combination of a tractor (100) and a baler (10), said method comprising the step of driving said tractor (100) operably connected to said baler (10), wherein the tractor (100) comprises a dual clutch transmission (701) comprising:
- an engine input shaft (702) configured to be coupled to the output of an engine of said tractor (100),
- an intermediate geared shaft (719) configured to be coupled to said drive system,
- a forward clutch (705) and a rearward clutch (706), each configured to be coupled to the engine input shaft (702);
- a first intermediate shafts (711) and a second intermediate shaft (711) comprising a plurality of gears (714, 715), said first and second intermediate shaft (711, 712) being configured to be coupled, via respective first and second clutches (707, 708), to said forward clutch (705) and to said rearward clutch (706) and being configured to be coupled to said intermediate geared shaft (719) defining with one of said gears (714, 715) a predetermined speed ratio between said engine input shaft (702) and said intermediate geared shaft (719), each of said gears (714, 715) defining a different predetermined speed ratio among them between said engine input shaft (702) and said intermediate geared shaft (719),
said method comprising the following steps:
- detecting whether a bale (B) has reached a predetermined size in a baling chamber of the baler (10) by means of a baler controller (210);
- receiving, by means of a baler controller (210), information from said at least one bale sensor (274) pertaining to whether the bale (B) reached the predetermined size;
- activating a tractor stop command device (212) located in the tractor (100) after the predetermined bale (B) size has been reached;
- detecting the speed of the tractor (100) by means of at least one speed sensor of said tractor (100);
- generating, by means of a processor of a tractor controller (250) connected to said stop command device (212) and to a tractor drive system, a value regarding a pre-set speed from a speed information detected by said at least one speed sensor;
- informing the baler controller (210) to initiate bale wrapping at said generated value regarding the pre-set speed by means of a communication link between the baler controller (210) and the tractor controller (250),
said method further comprises:
- a first step in which the tractor (100) speed is reduced or decelerated until a predetermined speed while a gear of said plurality of gears (714, 715) is coupled so said intermediate geared shaft (719) to give a driving torque to one of said first shaft (711) and second shaft (712);
- a second phase in which the tractor (100) is maintained at said predetermined speed;
- a third phase in which a gear of said plurality of gears (714, 15) of the other of said first shaft (711) and second shaft (712) is engaged;
- a fourth phase in which said first clutch (707) and second clutch (708) are both engaged or modulated in order to lock the transmission (701); and
- a fifth phase in which the forward clutch (705) and rearward clutch (706) are disengaged or modulated so that said input shaft (702) is consequently decoupled form transmission (701);
the method is **characterized in that** in said first decelerating phase one of said forward clutch (705) and said rearward clutch (706) is modulated so that it is disengaged and the other of said forward clutch (705) and said rearward clutch (706) is modulated in order to give a braking torque to said one of said first and a second intermediate shaft (711, 712) until a present velocity of said work vehicle is reached.

9. Method according to claim 8, **characterized in that** in said second phase, when said determined pre-set value of speed of said work vehicle is reached, one of said forward clutch (705) and said rearward clutch (706) is modulated to give a driving torque to the other of said first and a second intermediate shaft (711, 712) in order to balance the braking torque given by the other of said forward clutch (705) and said rearward clutch (706) and maintain said work vehicle at said pre-set velocity.

10. Method according to claim 8 or 9, **characterized in that** the lock of said transmission being obtained by creating a mechanical short circuit between the gears (714, 715) of said first and second shafts (711, 712), via said intermediate geared shaft (719) and said first and second clutches (707, 708).

11. Method according to any of the preceding claims from 8 to 10, **characterized in that** said mechanical short circuit is obtained by the activation of a range selecting stage (720) coupled to said intermediate geared shaft (719).

12. Method according to any of the preceding claims from 8 to 11, **characterized in that** said step of reducing or decelerating the tractor (100) speed occurs until said tractor (100) is at stand-still.

13. Method according to any of the preceding claims from 8 to 12, **characterized in that** it further comprises a step of unlocking the dual clutch transmission (701) by simultaneously selecting said forward clutch (705) and disengaging said other of said first and a second intermediate shaft (711, 712) from said forward and rearward clutches (705, 706).

## Patentansprüche

1. Kombination aus Traktor (100) und Ballenpresse (10) zum Pressen von geerntetem Erntegut, wobei die Kombination Folgendes aufweist:
- mindestens einen Ballensensor (274) zum Erfassen, ob ein Ballen (B) eine vorgegebene Größe in einer Ballenpresskammer der Ballenpresse (10) erreicht hat, wobei insbesondere der mindestens eine Ballensensor (274) in der Nähe der Ballenpresskammer angeordnet ist;
- ein Pressensteuergerät (210), insbesondere im Traktor (100) angeordnet, dazu eingerichtet, Informationen von dem mindestens einen Ballensensor (274) darüber zu empfangen, ob der Ballen (B) die vorgegebene Größe erreicht hat, und zum Einleiten des Wickelvorgangs des Ballens (B);
- eine Traktor-Stoppbefehlsvorrichtung (212), im Traktor (100) angeordnet, zur Betätigung durch eine Bedienperson, nachdem die vorgegebene Ballengröße erreicht wurde;
- mindestens einen Geschwindigkeitssensor des Traktors (100) zur Erfassung der Geschwindigkeit des Traktors (100);
- Traktorsteuergerät (250), verbunden mit der Stoppbefehlsvorrichtung (212) und einem Antriebssystem des Traktors, wobei das Traktorsteuergerät (250) einen Prozessor aufweist, um anhand von durch den mindestens einen Geschwindigkeitssensor erfassten Geschwindigkeitsinformationen einen Wert bezüglich einer voreingestellten Geschwindigkeit zu erzeugen;
- eine Kommunikationsverbindung zwischen dem Pressensteuergerät (210) und dem Traktorsteuergerät (250), wobei das Traktorsteuergerät (250) das Pressensteuergerät (210) anweist, den Wickelvorgang bei dem erzeugten Wert einzuleiten,
wobei der Traktor (100) ein Doppelkupplungsgetriebe (701) aufweist, das Folgendes umfasst:
- eine Motoreingangswelle (702), dazu eingerichtet, mit dem Ausgang eines Motors des Traktors (100) gekoppelt zu werden,
- eine Zwischenwelle mit Zahnrädern (719), dazu eingerichtet, mit dem Antriebssystem gekoppelt zu werden,
- eine Vorwärtskupplung (705) und eine Rückwärtskupplung (706), jeweils dazu eingerichtet, mit der Motoreingangswelle (702) gekoppelt zu werden;
- eine erste Zwischenwelle (711) und eine zweite Zwischenwelle (712) mit mehreren Zahnrädern (714, 715), wobei die erste und die zweite Zwischenwelle (711, 712) dazu eingerichtet sind, über die erste Kupplung (707) bzw. die zweite Kupplung (708) mit der Vorwärtskupplung (705) und der Rückwärtskupplung (706) gekoppelt zu werden, und dazu eingerichtet, mit der Zwischenwelle mit Zahnrädern (719) gekoppelt zu werden, wobei mit einem der Zahnräder (714, 715) ein vorbestimmtes Übersetzungsverhältnis zwischen der Motoreingangswelle (702) und der Zwischenwelle mit Zahnrädern (719) definiert wird, wobei jedes der Zahnräder (714, 715) untereinander ein unterschiedliches vorbestimmtes Übersetzungsverhältnis zwischen der Motoreingangswelle (702) und der Zwischenwelle mit Zahnrädern (719) definiert,
wobei das Traktorsteuergerät (250) dazu eingerichtet ist, die Geschwindigkeit des Traktors (100) zur Erreichung der voreingestellten Geschwindigkeit zu reduzieren und den zum Einleiten des Wickelvorgangs geeigneten Wert zu erzeugen, indem sowohl die erste Kupplung (707) als auch die zweite Kupplung (708) moduliert werden, um das Doppelkupplungsgetriebe (701) zu sperren;
wobei die Kombination aus Traktor (100) und Ballenpresse (10) **dadurch gekennzeichnet ist, dass** das Traktorsteuergerät (250) dazu eingerichtet ist, die Geschwindigkeit des Traktors (100) durch Modulation einer der Vorwärtskupplung (705) und Rückwärtskupplung (706) zu reduzieren, sodass diese ausgerückt wird, und die andere der Vorwärtskupplung (705) und Rückwärtskupplung (706) so zu modulieren, dass sie ein Bremsmoment auf eine der ersten und zweiten Zwischenwellen (711, 712) ausübt, bis die voreingestellte Geschwindigkeit des Traktors (100) erreicht ist.

2. Kombination aus Traktor (100) und Ballenpresse (10) nach Anspruch 1, **dadurch gekennzeichnet, dass** das Traktorsteuergerät (250) dazu eingerichtet ist, eine der Vorwärtskupplung (705) und Rückwärtskupplung (706) so zu modulieren, dass ein Antriebsmoment auf die andere der ersten und zweiten Zwischenwellen (711, 712) ausgeübt wird, um das von der anderen der Vorwärtskupplung (705) und Rückwärtskupplung (706) ausgeübte Bremsmoment auszugleichen und das Arbeitsfahrzeug bei der voreingestellten Geschwindigkeit zu halten.

3. Kombination aus Traktor (100) und Ballenpresse (10) nach einem der vorhergehenden Ansprüche, **dadurch gekennzeichnet, dass** das Traktorsteuergerät (250) dazu eingerichtet ist, einen mechanischen Kurzschluss zwischen den Zahnrädern (714, 715) der ersten und zweiten Welle (711, 712) über die Zwischenwelle mit Zahnrädern (719) und die erste und zweite Kupplung (707, 708) zu erzeugen.

4. Kombination aus Traktor (100) und Ballenpresse (10) nach einem der vorhergehenden Ansprüche, **dadurch gekennzeichnet, dass** das Kupplungsgetriebe des Weiteren eine Bereichswählstufe (720) umfasst, die mit der Zwischenwelle mit Zahnrädern (719) und dem Antriebssystem des Traktors (100) gekoppelt ist, wobei die Sperre des Doppelkupplungsgetriebes (701) durch einen mechanischen Kurzschluss zwischen den Zahnrädern (714, 715) der ersten und zweiten Welle (711, 712) über die Zwischenwelle mit Zahnrädern (719) und die erste und zweite Kupplung (707, 708) erfolgt.

5. Kombination aus Traktor (100) und Ballenpresse (10) nach einem der vorhergehenden Ansprüche, **dadurch gekennzeichnet, dass** das Traktorsteuergerät (250) dazu eingerichtet ist, das Doppelkupplungsgetriebe (701) zu entsperren, indem gleichzeitig die Vorwärtskupplung (705) ausgewählt und die andere der ersten und zweiten Zwischenwellen (711, 712) von den Vorwärts- und Rückwärtskupplungen (705, 706) abgekoppelt wird.

6. Kombination aus Traktor (100) und Ballenpresse (10) nach einem der vorhergehenden Ansprüche, **dadurch gekennzeichnet, dass** sie des Weiteren eine Bedienschnittstelle für die Ballenpresse aufweist, die mit dem Pressensteuergerät (210) verbunden ist, um einer Bedienperson eine Meldung vom Pressensteuergerät (210) zu übermitteln, dass die vorgegebene Ballengröße erreicht wurde.

7. Kombination aus Traktor (100) und Ballenpresse (10) nach einem der vorhergehenden Ansprüche, **dadurch gekennzeichnet, dass** sie des Weiteren eine Bedienschnittstelle für den Traktor aufweist, die mit dem Traktorsteuergerät (250) verbunden ist, um einer Bedienperson eine Anforderungsabfrage zur Einleitung eines Traktorstopps zu übermitteln, bevor das Traktorsteuergerät (250) den Traktorstopp einleitet.

8. Verfahren zum Pressen von geerntetem Erntegut mit einer Kombination aus Traktor (100) und Ballenpresse (10), wobei das Verfahren den Schritt umfasst, den Traktor (100), der mit der Ballenpresse (10) betriebsverbunden ist, zu fahren, wobei der Traktor (100) ein Doppelkupplungsgetriebe (701) aufweist, das Folgendes umfasst:
- eine Motoreingangswelle (702), dazu eingerichtet, mit dem Ausgang eines Motors des Traktors (100) gekoppelt zu werden,
- eine Zwischenwelle mit Zahnrädern (719), dazu eingerichtet, mit dem Antriebssystem gekoppelt zu werden,
- eine Vorwärtskupplung (705) und eine Rückwärtskupplung (706), jeweils dazu eingerichtet, mit der Motoreingangswelle (702) gekoppelt zu werden,
- eine erste Zwischenwelle (711) und eine zweite Zwischenwelle (712) mit mehreren Zahnrädern (714, 715), wobei die erste und die zweite Zwischenwelle (711, 712) dazu eingerichtet sind, über die erste bzw. die zweite Kupplung (707, 708) mit der Vorwärtskupplung (705) und der Rückwärtskupplung (706) gekoppelt zu werden und mit der Zwischenwelle mit Zahnrädern (719) gekoppelt zu werden, wobei mit einem der Zahnräder (714, 715) ein vorbestimmtes Übersetzungsverhältnis zwischen der Motoreingangswelle (702) und der Zwischenwelle mit Zahnrädern (719) definiert wird, wobei jedes der Zahnräder (714, 715) untereinander ein unterschiedliches vorbestimmtes Übersetzungsverhältnis zwischen der Motoreingangswelle (702) und der Zwischenwelle mit Zahnrädern (719) definiert ist,
wobei das Verfahren folgende Schritte umfasst:
- Erfassen, ob ein Ballen (B) eine vorgegebene Größe in einer Presskammer der Ballenpresse (10) erreicht hat, mittels eines Pressensteuergeräts (210);
- Empfangen von Informationen vom mindestens einen Ballensensor (274) durch das Pressensteuergerät (210) darüber, ob der Ballen (B) die vorgegebene Größe erreicht hat;
- Aktivieren einer Traktor-Stoppbefehlsvorrichtung (212), die sich im Traktor (100) befindet, nachdem die vorgegebene Ballengröße erreicht wurde;
- Erfassen der Geschwindigkeit des Traktors (100) mittels mindestens eines Geschwindigkeitssensors des Traktors (100);
- Erzeugen eines Wertes bezüglich einer voreingestellten Geschwindigkeit durch einen Prozessor eines Traktorsteuergeräts (250), das mit der Stoppbefehlsvorrichtung (212) und dem Antriebssystem des Traktors verbunden ist, anhand der durch den mindestens einen Geschwindigkeitssensor erfassten Geschwindigkeitsinformationen;
- Übermitteln einer Anweisung an das Pressensteuergerät (210), den Wickelvorgang bei dem erzeugten Wert bezüglich der voreingestellten Geschwindigkeit einzuleiten, mittels einer Kommunikationsverbindung zwischen dem Pressensteuergerät (210) und dem Traktorsteuergerät (250),
wobei das Verfahren des Weiteren Folgendes umfasst:
- ersten Schritt, in dem die Geschwindigkeit des Traktors (100) reduziert oder verlangsamt wird, bis eine vorbestimmte Geschwindigkeit erreicht ist, während ein Zahnrad der Zahnräder (714, 715) mit der Zwischenwelle mit Zahnrädern (719) gekoppelt ist, um ein Antriebsmoment auf eine der ersten Welle (711) und der zweiten Welle (712) auszuüben;
- eine zweite Phase, in der der Traktor (100) bei der vorbestimmten Geschwindigkeit gehalten wird;
- eine dritte Phase, in der ein Zahnrad der Zahnräder (714, 715) der anderen der ersten Welle (711) und der zweiten Welle (712) eingelegt wird;
- eine vierte Phase, in der die erste Kupplung (707) und die zweite Kupplung (708) beide eingerückt oder moduliert werden, um das Getriebe (701) zu sperren;
- eine fünfte Phase, in der die Vorwärtskupplung (705) und die Rückwärtskupplung (706) ausgerückt oder moduliert werden, sodass die Eingangswelle (702) infolgedessen vom Getriebe (701) entkoppelt wird;
wobei das Verfahren **dadurch gekennzeichnet ist, dass** in der ersten Verzögerungsphase eine der Vorwärtskupplung (705) und der Rückwärtskupplung (706) so moduliert wird, dass sie ausgerückt wird, und die andere der Vorwärtskupplung (705) und der Rückwärtskupplung (706) so moduliert wird, dass sie ein Bremsmoment auf eine der ersten und zweiten Zwischenwellen (711, 712) ausübt, bis eine voreingestellte Geschwindigkeit des Arbeitsfahrzeugs erreicht ist.

9. Verfahren nach Anspruch 8, **dadurch gekennzeichnet, dass** in der zweiten Phase, wenn der vorbestimmte Wert der Geschwindigkeit des Arbeitsfahrzeugs erreicht ist, eine der Vorwärtskupplung (705) und der Rückwärtskupplung (706) so moduliert wird, dass ein Antriebsmoment auf die andere der ersten und zweiten Zwischenwellen (711, 712) ausgeübt wird, um das von der anderen der Vorwärtskupplung (705) und Rückwärtskupplung (706) erzeugte Bremsmoment auszugleichen und das Arbeitsfahrzeug bei der voreingestellten Geschwindigkeit zu halten.

10. Verfahren nach Anspruch 8 oder 9, **dadurch gekennzeichnet, dass** die Sperre des Getriebes durch Erzeugen eines mechanischen Kurzschlusses zwischen den Zahnrädern (714, 715) der ersten und zweiten Welle (711, 712) über die Zwischenwelle mit Zahnrädern (719) und die erste und zweite Kupplung (707, 708) erfolgt.

11. Verfahren nach einem der vorhergehenden Ansprüche 8 bis 10, **dadurch gekennzeichnet, dass** der mechanische Kurzschluss durch Aktivierung einer Bereichswählstufe (720) erfolgt, die mit der Zwischenwelle mit Zahnrädern (719) gekoppelt ist.

12. Verfahren nach einem der vorhergehenden Ansprüche 8 bis 11, **dadurch gekennzeichnet, dass** der Schritt der Reduzierung oder Verzögerung der Geschwindigkeit des Traktors (100) erfolgt, bis der Traktor (100) zum Stillstand kommt.

13. Verfahren nach einem der vorhergehenden Ansprüche 8 bis 12, **dadurch gekennzeichnet, dass** es des Weiteren den Schritt aufweist, das Doppelkupplungsgetriebe (701) zu entsperren, indem gleichzeitig die Vorwärtskupplung (705) ausgewählt und die andere der ersten und zweiten Zwischenwellen (711, 712) von den Vorwärts- und Rückwärtskupplungen (705, 706) abgekoppelt wird.

## Revendications

1. Une combinaison d'un tracteur (100) et d'une presse à balles (10) pour la mise en balle des matériaux récoltés, ladite combinaison comprenant :
- au moins un capteur de balles (274) pour détecter si une balle (B) a atteint une taille prédéterminée dans une chambre de mise en balles (10), ledit au moins un capteur de balles (274) étant notamment situé à proximité de ladite chambre de mise en balles ;
- un contrôleur de presse à balles (210), notamment situé dans le tracteur (100), configuré pour recevoir des informations dudit au moins un capteur de balles (274) indiquant si la balle (B) a atteint la taille prédéterminée et pour lancer l'enrubannage de la balle (B) ;
- un dispositif de commande d'arrêt du tracteur (212) situé dans le tracteur (100) pour être activé par un opérateur une fois que la taille prédéterminée de la balle (B) a été atteinte ;
- au moins un capteur de vitesse du tracteur (100) pour détecter la vitesse du tracteur (100) ;
- un contrôleur de tracteur (250) connecté audit dispositif de commande d'arrêt (212) et à un système d'entraînement du tracteur, ledit contrôleur de tracteur (250) comprenant un processeur pour générer une valeur concernant une vitesse préréglée à partir d'une information de vitesse détectée par ledit au moins un capteur de vitesse ;
- une liaison de communication entre le contrôleur de presse à balles (210) et le contrôleur de tracteur (250), dans lequel le contrôleur de tracteur (250) informe le contrôleur de presse à balles (210) de lancer l'enrubannage de la balle à ladite valeur générée,
dans laquelle ledit tracteur (100) comprend une transmission à double embrayage (701) comprenant :
- un arbre d'entrée de moteur (702) configuré pour être couplé à la sortie d'un moteur dudit tracteur (100),
- un arbre intermédiaire à engrenages (719) configuré pour être couplé audit système d'entraînement,
- un embrayage avant (705) et un embrayage arrière (706), chacun configuré pour être couplé à l'arbre d'entrée de moteur (702) ;
- un premier arbre intermédiaire (711) et un second arbre intermédiaire (712) **comprenant** une pluralité d'engrenages (714, 715), ledit premier et ledit second arbre intermédiaire (711, 712) étant configurés pour être couplés, par l'intermédiaire d'un premier embrayage (707) et d'un second embrayage (708) respectifs, audit embrayage avant (705) et audit embrayage arrière (706) et étant configurés pour être couplés audit arbre intermédiaire à engrenages (719) définissant avec l'un desdits engrenages (714, 715) un rapport de vitesse prédéterminé entre ledit arbre d'entrée de moteur (702) et ledit arbre intermédiaire à engrenages (719), chacun desdits engrenages (714, 715) définissant entre eux un rapport de vitesse prédéterminé différent entre ledit arbre d'entrée de moteur (702) et ledit arbre intermédiaire à engrenages (719),
dans laquelle le contrôleur de tracteur (250) est configuré pour réduire la vitesse du tracteur (100) afin d'atteindre ladite vitesse préréglée et de générer ladite valeur capable de lancer l'enrubannage de la balle en modulant à la fois ledit premier embrayage (707) et ledit second embrayage (708) pour verrouiller ladite transmission à double embrayage (701) ;
ladite combinaison d'un tracteur (100) et d'une presse à balles (10) étant **caractérisée en ce que** ledit contrôleur de tracteur (250) est configuré pour réduire la vitesse du tracteur (100) en modulant l'un parmi ledit embrayage avant (705) et ledit embrayage arrière (706) de sorte qu'il est désengagé et que l'autre parmi ledit embrayage avant (705) et ledit embrayage arrière (706) est modulé afin de fournir un couple de freinage audit premier et audit second arbre intermédiaire (711, 712) jusqu'à ce que ladite vitesse préréglée dudit tracteur (100) soit atteinte.

2. Une combinaison d'un tracteur (100) et d'une presse à balles (10) selon la revendication 1, **caractérisée en ce que** ledit contrôleur de tracteur (250) est configuré pour moduler l'un parmi ledit embrayage avant (705) et ledit embrayage arrière (706) afin de fournir un couple moteur à l'autre parmi ledit premier et ledit second arbre intermédiaire (711, 712) pour équilibrer le couple de freinage fourni par l'autre parmi ledit embrayage avant (705) et ledit embrayage arrière (706) et pour maintenir ledit véhicule de travail à ladite vitesse préréglée.

3. Une combinaison d'un tracteur (100) et d'une presse à balles (10) selon l'une quelconque des revendications précédentes, **caractérisée en ce que** ledit contrôleur de tracteur (250) est configuré pour créer un court-circuit mécanique entre les engrenages (714, 715) dudit premier et dudit second arbre (711, 712), par l'intermédiaire dudit arbre intermédiaire à engrenages (719) et dudit premier et dudit second embrayage (707, 708).

4. Une combinaison d'un tracteur (100) et d'une presse à balles (10) selon l'une quelconque des revendications précédentes, **caractérisée en ce que** ladite transmission à embrayage comprend en outre un étage de sélection de plages (720) couplé audit arbre intermédiaire à engrenages (719) et audit système d'entraînement du tracteur (100), le verrouillage de ladite transmission à double embrayage (701) étant obtenu par un court-circuit mécanique entre les engrenages (714, 715) dudit premier et dudit second arbre (711, 712), par l'intermédiaire dudit arbre intermédiaire à engrenages (719) et dudit premier et dudit second embrayage (707, 708).

5. Une combinaison d'un tracteur (100) et d'une presse à balles (10) selon l'une quelconque des revendications précédentes, **caractérisée en ce que** ledit contrôleur de tracteur (250) est configuré pour déverrouiller ladite transmission à double embrayage (701) en sélectionnant ledit embrayage avant (705) en même temps qu'il désengage ledit autre parmi ledit premier et ledit second arbre intermédiaire (711, 712) dudit embrayage avant et dudit embrayage arrière (705, 706).

6. Une combinaison d'un tracteur (100) et d'une presse à balles (10) selon l'une quelconque des revendications précédentes, **caractérisée en ce qu'**elle comprend en outre une interface opérateur de presse à balles connectée au contrôleur de presse à balles (210) pour transmettre à un opérateur une notification du contrôleur de presse à balles (210) indiquant que la taille prédéterminée de la balle a été atteinte.

7. Une combinaison d'un tracteur (100) et d'une presse à balles (10) selon l'une quelconque des revendications précédentes, **caractérisée en ce qu'**elle comprend en outre une interface opérateur d'un tracteur connectée au contrôleur de tracteur (250) pour transmettre à un opérateur une demande d'autorisation pour engager un arrêt du tracteur avant que le contrôleur de tracteur (250) engage l'arrêt du tracteur.

8. Un procédé de mise en balle de matériaux récoltés comprenant une combinaison d'un tracteur (100) et d'une presse à balles (10), ledit procédé comprenant l'étape d'entraînement dudit tracteur (100) raccordé de manière fonctionnelle à ladite presse à balles (10), dans lequel le tracteur (100) comprend une transmission à double embrayage (701) comprenant :
- un arbre d'entrée de moteur (702) configuré pour être couplé à la sortie d'un moteur dudit tracteur (100),
- un arbre intermédiaire à engrenages (719) configuré pour être couplé audit système d'entraînement,
- un embrayage avant (705) et un embrayage arrière (706), chacun configuré pour être couplé à l'arbre d'entrée de moteur (702) ;
un premier arbre intermédiaire (711) et un second arbre intermédiaire (712) comprenant une pluralité d'engrenages (714, 715), ledit premier et ledit second arbre intermédiaire (711, 712) étant configurés pour être couplés, par l'intermédiaire d'un premier et d'un second embrayage (707, 708) respectifs, audit embrayage avant (705) et audit embrayage arrière (706) et étant configurés pour être couplés audit arbre intermédiaire à engrenages (719) définissant avec l'un desdits engrenages (714, 715) un rapport de vitesse prédéterminé entre ledit arbre d'entrée de moteur (702) et ledit arbre intermédiaire à engrenages (719), chacun desdits engrenages (714, 715) définissant entre eux un rapport de vitesse prédéterminé différent entre ledit arbre d'entrée de moteur (702) et ledit arbre intermédiaire à engrenages (719),
ledit procédé comprenant les étapes suivantes consistant à :
- détecter si une balle (B) a atteint une taille prédéterminée dans une chambre de mise en balles de la presse à balles (10) à l'aide d'un contrôleur de presse à balles (210) ;
- recevoir, par le biais d'un contrôleur de presse à balles (210), l'information provenant dudit au moins un capteur de balles (274) indiquant si la balle (B) a atteint la taille prédéterminée ;
- activer un dispositif de commande d'arrêt du tracteur (212) situé dans le tracteur (100) une fois que la taille prédéterminée de la balle (B) a été atteinte ;
- détecter la vitesse du tracteur (100) par le biais d'au moins un capteur de vitesse dudit tracteur (100) ;
- générer, par le biais d'un processeur d'un contrôleur de tracteur (250) raccordé audit dispositif de commande d'arrêt (212) et à un système d'entraînement de tracteur, une valeur concernant une vitesse préréglée à partir d'une information de vitesse détectée par ledit au moins un capteur de vitesse ;
- informer le contrôleur de presse à balles (210) de lancer l'enrubannage de la balle à ladite valeur générée concernant la vitesse préréglée par le biais d'une liaison de communication entre le contrôleur de presse à balles (210) et le contrôleur de tracteur (250), ledit procédé comprend en outre :
- une première étape au cours de laquelle la vitesse du tracteur (100) est réduite ou décélérée jusqu'à une vitesse prédéterminée tandis qu'un engrenage parmi ladite pluralité d'engrenages (714, 715) est couplé audit arbre intermédiaire à engrenages (719) pour fournir un couple d'entraînement à l'un parmi ledit premier arbre (711) et ledit second arbre (712) ;
- une deuxième étape au cours de laquelle le tracteur (100) est maintenu à ladite vitesse prédéterminée ;
- une troisième étape au cours de laquelle un engrenage parmi ladite pluralité d'engrenages (714, 715) de l'autre parmi ledit premier arbre (711) et ledit second arbre (712) est mis en prise ;
- une quatrième étape dans laquelle ledit premier embrayage (707) et ledit second embrayage (708) sont tous deux mis en prise ou modulés afin de verrouiller la transmission (701) ; et
- une cinquième étape dans laquelle l'embrayage avant (705) et l'embrayage arrière (706) sont désengagés ou modulés de sorte que ledit arbre d'entrée (702) est par conséquent découplé de la transmission (701) ;
le procédé est **caractérisé en ce que**, dans ladite première étape de décélération, l'un parmi ledit embrayage avant (705) et ledit embrayage arrière (706) est modulé de sorte qu'il est désengagé et l'autre parmi ledit embrayage avant (705) et ledit embrayage arrière (706) est modulé de sorte à fournir un couple de freinage audit premier et audit second arbre intermédiaire (711, 712) jusqu'à ce qu'une vitesse actuelle dudit véhicule de travail soit atteinte.

9. Procédé selon la revendication 8, **caractérisé en ce que** dans ladite deuxième étape, lorsque ladite valeur de vitesse préréglée dudit véhicule de travail est atteinte, l'un parmi ledit embrayage avant (705) et ledit embrayage arrière (706) est modulé pour fournir un couple moteur à l'autre parmi ledit premier et ledit second arbre intermédiaire (711, 712) afin d'équilibrer le couple de freinage fourni par l'autre parmi ledit embrayage avant (705) et ledit embrayage arrière (706) et de maintenir ledit véhicule de travail à ladite vitesse préréglée.

10. Procédé selon la revendication 8 ou la revendication 9, **caractérisé en ce que** le blocage de ladite transmission est obtenu en créant un court-circuit mécanique entre les engrenages (714, 715) dudit premier et dudit second arbre (711, 712), par l'intermédiaire dudit arbre intermédiaire à engrenages (719) et dudit premier et dudit second embrayage (707, 708).

11. Procédé selon l'une quelconque des revendications précédentes 8 à 10, **caractérisé en ce que** ledit court-circuit mécanique est obtenu par l'activation d'un étage de sélection de plages (720) couplé audit arbre intermédiaire à engrenages (719).

12. Procédé selon l'une quelconque des revendications précédentes 8 à 11, **caractérisé en ce que** ladite étape de réduction ou de décélération de la vitesse du tracteur (100) se produit jusqu'à ce que ledit tracteur (100) soit à l'arrêt.

13. Procédé selon l'une quelconque des revendications précédentes 8 à 12, **caractérisé en ce qu'**il comprend en outre une étape de déverrouillage de la transmission à double embrayage (701) en sélectionnant simultanément ledit embrayage avant (705) et en désengageant ledit autre parmi ledit premier et ledit second arbre intermédiaire (711, 712) dudit embrayage avant et dudit embrayage arrière (705, 706).
